# EUROPEAN PATENT SPECIFICATION

(11) **EP 1 721 945 B1**
(45) Date of publication and mention of the grant of the patent: **15.08.2007**
(21) Application number: 06009644.3
(22) Date of filing: 10.05.2006
(51) Int. Cl.: C09D 11/02

(54) **Ink composition**
Tintenzusammensetzung
Composition d'encre

(30) Priority: 12.05.2005 JP 2005139893; 17.08.2005 JP 2005236471
(43) Date of publication of application: 15.11.2006
(73) Proprietor: FUJIFILM Corporation, Minato-ku Tokyo (JP)
(72) Inventor: Sugai, Masaharu Fuji Photo Film Co., Ltd., Haibara-gun Shizuoka (JP)
(74) Representative: HOFFMANN EITLE

(56) References cited:
- EP-A- 0 526 396
- US-A1- 2003 202 082

## Description

### Technical Field

The present invention relates to an ink composition, in particular, a radiation-curable ink jet-recording ink composition, which does not undergo any reduction of sensitivity, has good storage stability, is free of any deformation and/or discoloration of the cured product of the ink due to the heat generated upon the irradiation thereof with light rays, has good adhesion to a substrate material and is thus capable of forming high quality images as well as an ink jet-recording method using the ink composition and printed matters obtained using the same.

### Background Art

As the image-recording methods in which images are formed on a medium to be recorded (or a recording medium) such as paper on the basis of image data signals, there have been known, for instance, the electrophotography technique, the sublimation-type and melt-type thermal ink-transfer techniques, and the ink jet-recording technique. The electrophotography technique requires the use of a process for forming an electrostatic latent image on a drum made of a light-sensitive material through charging and light-exposure operations and therefore, this technique suffers from various problems. For instance, the technique requires the use of a complicated system and this in turn results in an increase in the production cost. In addition, the device used in the thermal ink-transfer technique is rather cheap, but this technique suffers from problems in that the technique requires the use of an ink ribbon, this in turn leads to an increase in the running cost and the generation of a large amount of waste matter. On the other hand, the ink jet-recording technique uses a cheap device and is a technique in which images are directly formed on a recording medium by discharging ink only on the desired image area. Accordingly, this technique permits the efficient use of the ink and requires a reduced running cost. Furthermore, this technique is less noisy and therefore, it is quite excellent as an image-recording technique.

Among the image-recording systems according to the ink jet-recording technique, the ink jet-recording technique in which images can be formed by curing ink through the irradiation thereof with radiant rays such as ultraviolet rays has attracted special interest lately since this technique may give out a relatively small quantity of bad smells, is excellent in the quick drying ability and permits the recording of images on a recording medium free of any ink absorbability. Such a radiation curable ink composition should not only have a sufficiently high sensitivity and provide high quality images, but also have a high storage stability. The ink composition for ink jet-recording may be exposed, in a high probability, to high temperature conditions after the production thereof till it appears on the market, for instance, during the transportation thereof and storing the same. In such cases, the polymerization and/or decomposition of such an ink composition may proceed by the action of heat even if the ink composition is protected from any irradiation with light rays and accordingly, the ink is not sometimes stably discharged during printing operations.

The radiation curable ink composition comprises a photopolymerizable monomer and an initiator and the ink undergoes curing through the polymerization reaction initiated by the irradiation thereof with light rays. Presently, the majority of monomers of this type are radical polymerizable compounds typical of acrylates from the viewpoint of the easy availability and the higher polymerizability. However, the radical polymerizable monomer suffers from such problems that it shows a high volume shrinkage factor when it is polymerized into a polymer and accordingly, the resulting polymer has a reduced adhesion to a substrate for printing.

On the other hand, a cationic polymerizable system in general shows a low volume shrinkage factor upon its polymerization and is superior, in the adhesion to the substrate, to the radical polymerizable system, but there has not yet been developed any cationic polymerizable system having satisfactory adhesion.

In addition, there has been known an ultraviolet light-curable resin composition comprising a photolytically acid-generating agent and a cationic polymerizable substance as an overcoating agent and it has been reported that the resin composition shows relatively high sensitivity to curing (see Japanese Un-Examined Patent Publication (hereunder referred to as "JP A") Hei 9-183928). However, the resin composition is inferior in the storage stability. Moreover, the composition suffers from problems in that it is pigmented when it is cured and that there is thus observed some difference in the color feeling before and after the curing of the ink.

On the other hand, there has been reported an ink composition which comprises a basic compound in order to improve the ability to stably discharge ink drops (or to improve the storage stability of the ink) and the reduction of the degree of the curling and wrinkling of a recording material due to the shrinkage of the ink encountered when the ink composition is cured (see JP A 2003-341217). If a basic substance is used in a large quantity, however, a problem arises, such that the function of the acid-generating agent is deteriorated upon irradiation with light rays and this accordingly leads to the reduction of the sensitivity of the ink composition.

### Disclosure of the Invention

Accordingly, it is an object of the present invention to provide an ink composition, in particular, an ink jet-recording ink composition, which does not undergo any reduction of sensitivity, has excellent storage stability, is free of any deformation and/or discoloration of the cured product of the ink due to the heat generated upon the irradiation thereof with light rays, has good adhesion to a substrate and is thus capable of forming high quality images as well as an ink jet-recording method using the ink composition and printed matters obtained using the same.

It is another object of the present invention to provide a lithographic printing plate which never requires the use of any developing treatment, can provide a printing plate possessing high printing durability and which permits the formation of high quality images and a method for producing such a lithographic printing plate.

The foregoing objects of the present invention can be accomplished by providing an ink composition which comprises (a) a polymerizable compound, (b) a photopolymerization initiator, and (c) at least one compound selected from the group consisting of endothermic compounds and thermally expandable compounds.

Preferably, the foregoing ink composition further comprises (d) a coloring material. In addition, the coloring material (d) is preferably a pigment or an oil-soluble dye.

In a preferred embodiment of the present invention, the ink composition is an ink jet-recording ink composition.

The present invention further provides an ink jet-recording method which comprises the steps of ejecting the foregoing ink composition to place it on a recording medium and irradiating the ink composition with radiant rays to thus make the ink composition cure.

Moreover, the present invention likewise provides a printed matter obtained by ejecting the foregoing ink composition to place it on a recording medium and then irradiating the ink composition with radiant rays to thus make the ink composition cure.

Further, the present invention also provides a method for the preparation of a lithographic printing plate which comprises the steps of ejecting the foregoing ink composition to place (or to impact) it on a hydrophilic substrate and then irradiating the ink composition with radiant rays to thus form a hydrophobic area on the substrate.

The present invention likewise provides a lithographic printing plate having hydrophobic areas formed by ejecting the foregoing ink composition to place it on a hydrophilic substrate and then irradiating the ink composition with radiant rays to thus make the ink composition cure.

The ink composition of the present invention is characterized in that it comprises at least one compound selected from the group consisting of endothermic compounds and thermally expandable compounds. The use of such an endothermic compound would permit the inhibition of any deformation and volume shrinkage due to the effect of the heat generated upon the irradiation with light rays or encountered when the composition is stored under high temperature conditions and as a result, the ink composition is improved in the adhesion to a substrate, the sensitivity and the storage stability. Moreover, in particular, the endothermic compound absorbs heat when stored under high temperature conditions, in turn inhibits the polymerization and/or decomposition due to the action of the heat and thus permits the stable storage of the resulting ink composition. Moreover, the endothermic compound may absorb an appropriate amount of heat when curing the composition by irradiating the same with light rays, and the use of the same would likewise permit the production of a high quality ink composition whose cured product is free of any deformation and/or discoloration, without adversely affecting the curability (sensitivity to light rays) of the ink composition. In particular, the thermally expandable compound causes volume expansion when irradiated with light rays to thus compensate the volume loss due to the shrinkage accompanied by the polymerization reaction of the composition and to thus inhibit the overall volume shrinkage of the cured product of the ink and as a result, the thermally expandable compound can provide an ink composition which is improved in the adhesion of the cured product thereof to the substrate, without impairing the sensitivity to light rays, the storage stability and the quality of images formed from the composition, which are quite important characteristics as an ink composition.

### Best Mode for Carrying Out the Invention

### (1) Ink Composition

### (1-1-1) Endothermic Compound

The endothermic compound used in the ink composition of the present invention means a compound which causes a phase change (more specifically, a change from a liquid phase to gas phase) through the discharge of water molecules of hydration, or a compound capable of absorbing heat through other chemical changes (for instance, the discharge of NH₃ molecules from MgNH₄PO₄).

The compounds preferably used herein as such endothermic compounds are inorganic compounds containing water molecules (or water molecules of hydration) and such an inorganic compound absorbs heat through the delivery of the water molecules of hydration. The endothermic compounds more preferably used herein are water molecule-containing inorganic compounds present in such a form that it is insoluble in water or only slightly soluble in water. The phrase "such a form that it is insoluble in water or only slightly soluble in water" used herein means that each corresponding compound preferably has a solubility in water on the order of not more than about 5% as determined at 25°C and more preferably has a solubility in water of not more than about 20% as determined at 50°C.

Specific examples of such endothermic compounds usable in the present invention are alumina trihydrate (ATH) (Al₂O₃· 3H₂O), hydrated zinc borate (ZnB₂O₄· 6H₂O), calcium sulfate also known as gypsum (CaSO₄· 2H₂O), magnesium ammonium phosphate (MgNH₄PO₄· 6H₂O), magnesium hydroxide [Mg(OH)₂], ZnB and encapsulated H₂O, calcium hydroxide [Ca(OH)₂], hydrotalcite [Mg₆Al₂(OH)₁₆CO₂ · 4H₂O], calcium aluminate [3CaO · Al₂O₃ · 6H₂O], barium metaborate [BaO · B₂O₃ · H₂O], borax [Na₂O · 2B₂O₃ · 10H₂O], and kaolin clay [Al₂O₃ · SiO₂ · 2H₂O].

### (1-1-2) Thermally Expandable Compound

The thermally expandable compound used in the ink composition of the present invention is a compound which can expand due to the action of a physical force during heating. The term "expansion" used herein means an increase in the particle size due to some physical action and it is in general correlated with an increase in the real particle size of an expandable material.

More preferred thermally expandable compounds are those which can expand, upon heating, to a volume of about 1.5 time that of the initial volume. The temperature of the compound during the foregoing heating operation ranges from 20 to 150°C, preferably 25 to 100°C and more preferably 30 to 70°C.

Examples of such thermally expandable compounds are expandable graphite such as intercalated graphite and acid-treated graphite, hydrated alkali metal silicates, vermiculite, perlite, NaBSi, volcanic glass containing CO₂-foaming agent incorporated into the glass particles constituting the same, mica and mixtures thereof.

Examples of preferred expandable graphite materials are acid-intercalated graphite materials having acid-neutralized surface, commercially available from UCAR Carbon Company in Cleveland, Ohio under the trade names of "GRAPHITE TG373" and "GRAPHITE IG-338-50". Another example of such an expandable graphite material likewise preferably used herein is an expandable composition containing a particulate hydrated alkali metal silicate commercially available from 3M Company in Cent Pole, Minnesota under the trade name of "EXPANTROL 4BW".

The foregoing at least one compound selected from the group consisting of endothermic compounds and thermally expandable compounds is used in an amount currently ranging from 0.001 to 10% by weight and preferably 0.01 to 5% by weight on the basis of the total weight of the ink composition.

### (1-2) Polymerizable Compound

The polymerizable compound which may be incorporated into the ink composition of the present invention may be, for instance, radical polymerizable compounds and cationic polymerizable compounds.

The radical polymerizable compound which may be incorporated into the ink composition of the present invention may be, for instance, a variety of radical polymerizable monomers. The kinds of polymerizable functional groups of the radical polymerizable monomers may arbitrarily be selected for the purpose of the control of the polymerizability and physical properties of the resulting ink composition and the cured product thereof, but preferably used herein are radical polymerizable monomers derived from (meth)acrylates from the viewpoint of the rate of polymerization and the wide applicability.

The following are examples of monomers (hereunder also referred to as (meth)acrylates) usable in the present invention and capable of being derived from (meth)acrylates:

Examples of monofunctional (meth)acrylates are hexyl (meth)acrylate (hexyl ester of (meth)acrylic acid, the same is true for the following substances), 2-ethylhexyl (meth)acrylate, tert-octyl (meth)acrylate, isoamyl (meth)acrylate, decyl (meth)acrylate, isodecyl (meth)acrylate, cyclohexyl (meth)acrylate, 4-n-butyl cyclohexyl (meth)acrylate, bornyl (meth)acrylate, isobornyl (meth)acrylate, benzyl (meth)acrylate, 2-ethylhexyl diglycol (meth)acrylate, butoxy-ethyl (meth)acrylate, 2-chloroethyl (meth)acrylate, 4-bromobutyl (meth)acrylate, cyano-ethyl (meth)acrylate, butoxy-methyl (meth)acrylate, 3-methoxybutyl (meth)acrylate, alkoxy-methyl (meth)acrylate, alkoxy-ethyl (meth)acrylate, 2-(2-methoxyethoxy) ethyl (meth)acrylate, 2-(2-butoxyethoxy) ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethyl-phenyl (meth)acrylate, 4-chlorophenyl (meth)acrylate, phenoxy-methyl (meth)acrylate, phenoxy-ethyl (meth)acrylate, glycidyl (meth)acrylate, glycidyl oxybutyl (meth)acrylate, glycidyl oxyethyl (meth)acrylate, glycidyl oxypropyl (meth)acrylate, tetrahydro-furfuryl (meth)acrylate, hydroxy-alkyl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxybutyl (meth)acrylate, dimethyl-aminoethyl (meth)acrylate, diethylaminoethyl (meth)acrylate, dimethyl-aminopropyl (meth)acrylate, diethyl-aminopropyl (meth)acrylate, trimethoxy-silylpropyl (meth)acrylate, trimethyl-silylpropyl (meth)acrylate, polyethylene oxide monomethyl ether (meth)acrylate, oligo-ethylene oxide monomethyl ether (meth)acrylate, polyethylene oxide (meth)acrylate, oligo-ethylene oxide (meth)acrylate, oligo-ethylene oxide monoalkyl ether (meth)acrylate, polyethylene oxide monoalkyl ether (meth)acrylate, di-propylene glycol (meth)acrylate, polypropylene oxide monoalkyl ether (meth)acrylate, ohgo-propylene oxide monoalkyl ether (meth)acrylate, 2-methacryloyloxyethyl succinate, 2-methacryloyloxy hexahydro-phthalate, 2-methacryloyloxyethyl 2-hydroxypropyl phthalate, butoxy-diethylene glycol (meth)acrylate, trifluoro-ethyl (meth)acrylate, perfluoro-octyl ethyl (meth)acrylate, 2-hydroxy-3-phenoxypropyl (meth)acrylate, EO-modified phenol (meth)acrylate, EO-modified cresol (meth)acrylate, EO-modified nonyl-phenol (meth)acrylate, PO-modified nonyl-phenol (meth)acrylate, and EO-modified 2-ethylhexyl (meth)acrylate.

The following are specific examples of bi-functional (meth)acrylates: 1,6-hexanediol di-(meth)acrylate, 1,10-decanediol di-(meth)acrylate, neopentyl glycol di-(meth)acrylate, 2,4-dimethyl-1,5-pentanediol di-(meth)acrylate, butylethyl propane-diol di-(meth)acrylate, ethoxylated cyclohexane-methanol di-(meth)acrylate, polyethyleneglycol di-(meth)acrylate, oligo-ethylene glycol di-(meth)acrylate, ethylene glycol di-(meth)acrylate, 2-ethyl-2-butyl-butanediol di-(meth)acrylate, hydroxy pivalic acid neopentyl glycol di-(meth)acrylate, EO-modified bisphenol A di-(meth)acrylate, bisphenol F polyethoxy di-(meth)acrylate, polypropylene glycol di-(meth)acrylate, oligo-propylene glycol di-(meth)acrylate, 1,4-butanediol di-(meth)acrylate, propanediol di-(meth)acrylate, 1,9-nonane di-(meth)acrylate, propoxylated and ethoxylated bisphenol A di-(meth)acrylate, and tri-cyclodecane di-(meth)acrylate.

Specific examples of tri-functional (meth)acrylates are as follows: trimethylol-propane tri-(meth)acrylate, trimethylol-ethane tri-(meth)acrylate, alkylene oxide-modified tri-(meth)acrylate of trimethylol-propane, pentaerythritol tri-(meth)acrylate, di-pentaerythritol tri-(meth)acrylate, trimethylol-propane tri-((meth)acryloyloxy-propyl) ether, isocyanuric acid alkylene oxide-modified tri-(meth)acrylate, propionic acid di-pentaerythritol tri-(meth)acrylate, tri-((meth)acryloyloxy-ethyl) isocyanurate, hydroxy pivalic aldehyde-modified dimethylol-propane tri-(meth)acrylate, sorbitol tri-(meth)acrylate, propoxylated trimethylol-propane tri-(meth)acrylate, and ethoxylated glycerin triacrylate.

Specific examples of tetra-functional (meth)acrylates are as follows: penta-erythritol tetra-(meth)acrylate, sorbitol tetra-(meth)acrylate, di-trimethylol-propane tetra-(meth)acrylate, propionic acid di-pentaerythritol tetra-(meth)acrylate, and ethoxylated pentaerythritol tetra-(meth)acrylate.

Specific examples of penta-functional (meth)acrylates are as follows: sorbitol penta-(meth)acrylate, and di-pentaerythritol penta-(meth)acrylate.

Specific examples of hexa-functional (meth)acrylates are as follows: di-pentaerythritol hexa-(meth)acrylate, sorbitol hexa-(meth)acrylate and caprolactone-modified di-penta-erythritol hexa-(meth)acrylate.

In the present specification, the term "(meth)acrylate" means the abbreviated expression for representing the fact that it may have the structures of both methacrylate and acrylate.

Examples of monomers other than the foregoing (meth)acrylates include those listed below:
Examples of (meth)acrylamides are (meth)acrylamide, N-methyl (meth)-acrylamide, N-ethyl (meth)acrylamide, N-propyl (meth)acrylamide, N-n-butyl (meth)-acrylamide, N-t-butyl (meth)acrylamide, N-butoxy-methyl (meth)acrylamide, N-isopropyl (meth)acrylamide, N-methylol (meth)acrylamide, N,N-dimethyl (meth)acrylamide, N,N-diethyl (meth)acrylamide, (meth)acryloyl morpholine. In this respect, the term "(meth)acrylamide" means the abbreviated expression for representing the fact that it may have the structures of both methacrylamide and acrylamide.

Specific examples of olefins are di-cyclopentadiene, ethylene, propylene, 1-butene, 1-pentene, vinyl chloride, vinylidene chloride, isoprene, chloroprene, butadiene, 2,3-dimethyl-butadiene, and cyclohexadiene.

Specific examples of styrenes are styrene, methylstyrene, dimethyl-styrene, trimethyl-styrene, ethylstyrene, isopropyl-styrene, chloromethyl-styrene, methoxy-styrene, acetoxy-styrene, chlorostyrene, dichloro-styrene, bromostyrene, methyl ester of vinyl-benzoic acid, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-t-butoxycarbonylstyrene, 4-methoxystyrene, and 4-t-butoxystyrene.

Examples of vinyl ethers are methyl vinyl ether, butyl vinyl ether, hexyl vinyl ether, methoxy vinyl ether, 2-ethylhexyl vinyl ether, methoxy-ethyl vinyl ether, cyclohexyl vinyl ether, and chloroethyl vinyl ether.

Examples of other monomers include butyl crotonate, hexyl crotonate, dimethyl itaconate, dibutyl itaconate, diethyl maleate, dimethyl maleate, dibutyl maleate, diethyl fumarate, dimethyl fumarate, methyl vinyl ketone, phenyl vinyl ketone, methoxy-ethyl vinyl ketone, N-vinyl oxazolidone, N-vinyl pyrrolidone, vinyl formamide, vinylidene chloride, methyl-malononitrile, vinylidene, diphenyl-2-acryloyloxy ethyl phosphate, diphenyl-2-methacryloyloxy ethyl phosphate, dibutyl-2-acryloyloxy ethyl phosphate, dioctyl-2-methacryloyloxy ethyl phosphate, vinyl acetate, vinyl benzoate, and N-vinyl carbazole.

The ink composition of the present invention comprises a cationic polymerizable compound. For example, cationic polymerization based photo-curable resin is known as a cationic polymerizable compound, and recently cationic polymerization based photo-curable resin which has been sensitized in the area with the wavelength longer than that of visible light has been also disclosed in, for example, J.P. KOKAI Nos. Hei 6-43633, Hei 8-324167 and the like.

Various known cationic polymerizable compounds (monomers) may be used as cationic polymerizable compounds. For example, epoxy compound, vinyl ether compound, oxetane compound and the like exemplified in J.P. KOKAI Nos. Hei 6-9714, 2001-31892, 2001-40068, 2001-55507, 2001-310938, 2001-310937, and 2001-220526 are included. The cationic polymerizable compounds of the present invention include oxetane compound, epoxy compound, vinyl ether compound or a combination thereof.

(a) Oxetane compound represents a compound having an oxetane ring, and include all the known oxetane compounds containing an oxetane ring such as those described in J.P. KOKAI Nos. 2001-220526 and 2001-310937. In particular, compounds containing an oxetane ring represented by the general formula (1) are preferable.

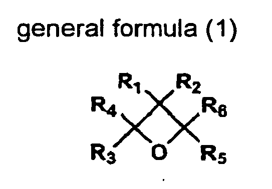

In the general formula (1), R₁ to R₆ each represents a hydrogen atom or a substituent, with the proviso that at least one of the groups represented by R₃ to R₆ is a substituent.

In the general formula (1), each substituent represented by R₁ to R₆ includes, for example, fluorine atom, alkyl group with 1 to 6 carbon atoms (for example, methyl group, ethyl group, propyl group, butyl group, etc.), fluoroalkyl group with 1 to 6 carbon atoms, allyl group, aryl group (for example, phenyl group, naphthyl group, etc.), furyl group or thienyl group. Moreover these groups may have further any substituents.

The compounds having one oxetane ring in the molecule include the 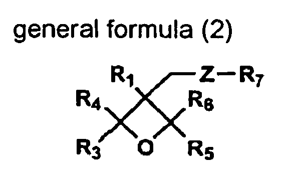 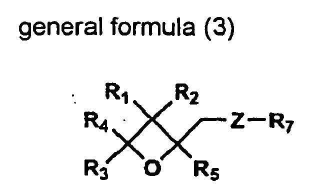 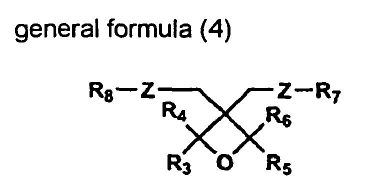 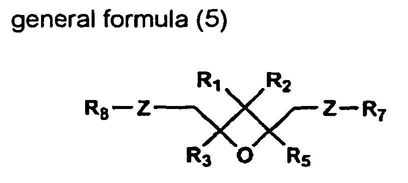 compounds represented by the following general formulas (2) to (5).

In the above general formulas (2) to (5), each of R₁ to R₆ represents synonymous group with the respective group in the general formula (1), and Z each independently represents an oxygen or sulfur atom, or a divalent hydrocarbon group optionally containing oxygen or sulfur atom in its main chain.

In the above general formulas (2) to (5), each substituent represented by R₇ or R₈ denotes alkyl group with 1 to 6 carbon atoms (for example, methyl group, ethyl group, propyl group or butyl group etc.), alkenyl group with 1 to 6 carbon atoms (for example, 1-propenyl group, 2-propenyl group, 2-methyl-1-propenyl group, 2-methyl-2-propenyl group, 1-butenyl group, 2-butenyl group, 3-butenyl group, etc.), aryl group (for example, phenyl group, naphthyl group, etc.), aralkyl group (for example, benzyl group, fluorobenzyl group, methoxybenzyl group, etc.), acyl group with 1 to 6 carbon atoms (for example, propylcarbonyl group, butylcarbonyl group, pentylcarbonyl group, etc.), alkoxycarbonyl group with 1 to 6 carbon atoms (for example, ethoxycarbonyl group, propoxycarbonyl group, butoxycarbonyl group, etc.), alkylcarbamoyl group with 1 to 6 carbon atoms (for example, propylcarbamoyl group, butylpentylcarbamoyl group, etc.), alkoxycarbamoyl group (for example, ethoxycarbamoyl group, etc.).

In the above general formulas (2) to (5), a divalent hydrocarbon group optionally containing oxygen or sulfur atom in its main chain represented by Z includes alkylene group (for example, ethylene group, trimethylene group, tetramethylene group, propylene group, ethylethylene group, pentamethylene group, hexamethylene group, heptamethylene group, octamethylene group, nanomethylene group, decamethylene group, etc.), alkenylene group (for example, vinylene group, propenylene group, etc.), alkynylene group (for example, ethynylene group, 3-pentynylene group, etc.), and the carbon atoms of said alkylene group, alkenylene group and alkynylene group may be replaced by oxygen atoms or sulfur atoms.

For the oxetane ring-containing compound of the present invention, the compounds of the above general formulas (2) to (5), wherein R₁ is a lower alkyl group, particularly ethyl group, R₇ and R₈ are propyl group, butyl group, or benzyl group, and Z is a hydrocarbon group not containing oxygen or sulfur atoms (alkylene group, alkenylene group, alkynylene group, etc.) are preferable, and wherein at least one of the groups represented by R₃ to R₆ is a substituent.

The compounds containing two or more oxetane rings include the compounds represented by the following general formulas (6) or (7).

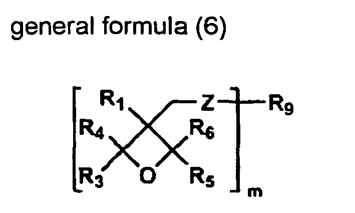

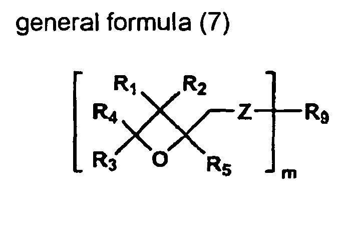

In the above general formulas (6) and (7), m represents 2, 3 or 4, and Z is synonymous with Z in the foregoing general formulas (2) to (5).

Each of R₁ to R₆ represents synonymous group with the respective group in the general formula (1), in the proviso that at least one of R₃ to R₆ in the general formula (6) is a substituent.

R₉ represents a linear or branched alkylene group with 1 to 12 carbon atoms, a linear or branched poly (alkyleneoxy) group, or a divalent group selected from the group consisting of the following general formulas (9), (10) and (11). The above linear or branched alkylene group is preferably the group represented by the following general formula (8).

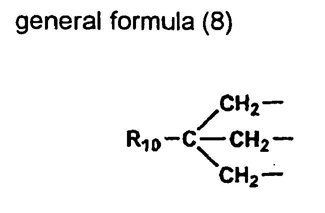

In the general formula (8), Rio represents a lower alkyl group such as methyl group, ethyl group, propyl group and the like.

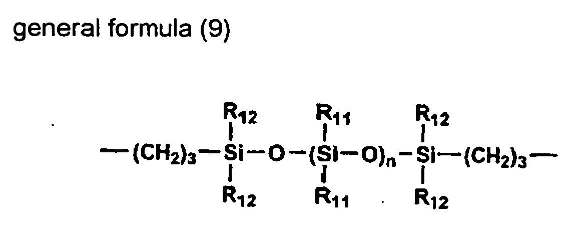

In the above general formula (9), n represents an integer of 1 to 2000, R₁₁ represents an alkyl group with 1 to 10 carbon atoms (for example, methyl group, ethyl group, propyl group, butyl group, pentyl group, hexyl group, heptyl group, octyl group, nonyl group, etc.), or the group selected from the following general formula (12). R₁₂ represents an alkyl group with 1 to 10 carbon atoms (for example, methyl group, ethyl group, propyl group, butyl group, pentyl group, hexyl group, heptyl group, octyl group, nonyl group, etc.).

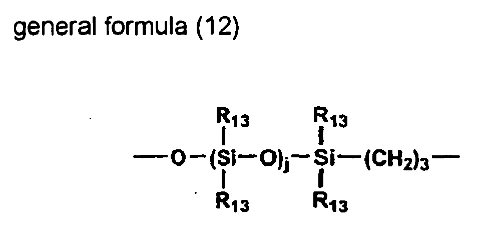

In the above general formula (12), j represents an integer of 1 to 100, and R₁₃ represents an alkyl group with 1 to 10 carbon atoms (for example, methyl group, ethyl group, propyl group, butyl group, pentyl group, hexyl group, heptyl group, octyl group, nonyl group, etc.).

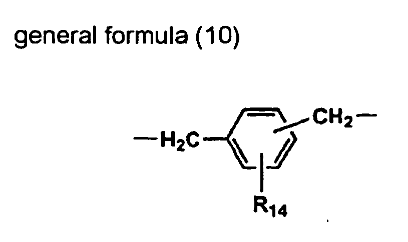

In the above general formula (10), R₁₄ represents a hydrogen atom, an alkyl group with 1 to 10 carbon atoms (for example, methyl group, ethyl group, propyl group, butyl group, pentyl group, hexyl group, heptyl group, octyl group, nonyl group, etc.), an alkoxy group with 1 to 10 carbon atoms (for example, methoxy group, ethoxy group, propoxy group, butoxy group, pentoxy group, etc.), a halogen atom (for example, fluorine, chlorine, bromine, iodine, etc.), a nitro group, cyano group, mercapto group, alkoxycarbonyl group (for example, methyloxycarbonyl group, ethyloxycarbonyl group, butyloxycarbonyl group, etc.) or carboxyl group.

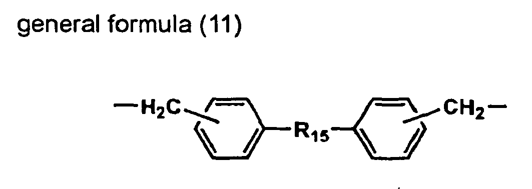

In the above general formula (11), R₁₅ represents an oxygen atom, sulfur atom, NH, SO, SO₂, CH₂, C(CH₃)₂ or C(CF₃)₂.

In preferred embodiment of the part structure of the oxetane ring-containing compound used in the present invention, for example, in the above general formulas (6) and (7), R₁ is preferably a lower alkyl group (for example, methyl group, ethyl group, propyl group, etc.), particularly preferably ethyl group. Moreover, for R₉, hexamethylene group or the group which R₁₄ is a hydrogen atom in the above general formula (10) is preferably used.

It is preferable that R₁₀ is an ethyl group in the above general formula (8), and each of R₁₂ and R₁₃ is a methyl group in the general formulas (9) and (12), with the proviso that at least one of the groups represented by R₃ to R₆ in the general formula (6) is a substituent.

Moreover, the compounds having two or more oxetane rings in the molecule include the compounds represented by the following general formula (13).

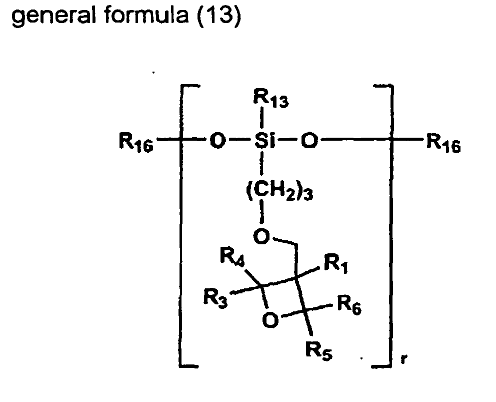

In the above general formula (13), r is an integer of 25 to 200, and R₁₆ is an alkyl group with 1 to 4 carbon atoms or a trialkylsilyl group. Moreover, R₁ and R₄ to R₆ are synonymous with those in said general formula (1), and at least one of the groups represented by R₃ to R₆ is a substituent.

The specific examples of the oxetane ring-containing compound represented by the above general formula (1) according to the present invention are listed in the following table 1, but not limited thereto.

**Table 1**

| | | | | | | |
|---|---|---|---|---|---|---|
| 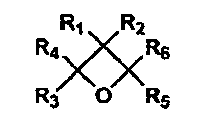 | | | | | | |

| compound No. | R₅ | R₆ | R₃ | R₄ | R₁ | R₂ |
|---|---|---|---|---|---|---|
| 1 | * 1 | H | H | H | -CH₃ | -CH₃ |
| 2 | -CH₃ | H | H | H | -CH₃ | -CH₃ |
| 3 | - CH₂CH₃ | H | H | H | -CH₃ | -CH₃ |
| 4 | - CH₂CH₂CH₃ | H | H | H | -CH₃ | -CH₃ |
| 5 | -CH(CH₃)CH₃ | H | H | H | -CH₃ | -CH₃ |
| 6 | - (CH₂)₇CH₃ | H | H | H | -CH₃ | -CH₃ |
| 7 | *2 | H | H | H | -CH₃ | -CH₃ |
| 8 | -CH₃ | H | -CH₃ | H | -CH₃ | -CH₃ |
| 9 | - CH₂CH₂CH₃ | H | -CH₂CH₂CH₃ | H | -CH₃ | -CH₃ |
| 10 | -CH₃ | -CH₃ | H | H | -CH₃ | -CH₃ |
| 11 | -CH₂CH₂CH₃ | -CH₂CH₂CH₃ | H | H | -CH₃ | -CH₃ |
| 12 | *2 | *2 | H | H | -CH₃ | -CH₃ |
| 13 | *3 | H | H | H | -CH₃ | -CH₃ |
| 14 | *4 | H | H | H | -CH₃ | -CH₃ |
| 15 | -CF₃ | H | H | H | -CH₃ | -CH₃ |
| 16 | *4 | H | H | H | -CH₃ | - CH₃ |
| 17 | *5 | H | H | H | -CH₃ | -CH₃ |
| 18 | *6 | H | H | H | -CH₃ | -CH₃ |
| 19 | *7 | H | H | H | -CH₃ | -CH₃ |
| 20 | *8 | H | H | H | -CH₃ | -CH₃ |
| 21 | - OCH₃ | H | H | H | -CH₃ | -CH₃ |
| 22 | *9 | H | H | H | -CH₃ | -CH₃ |
| 23 | *10 | H | H | H | -CH₃ | -CH₃ |
| 24 | *11 | H | H | H | -CH₃ | -CH₃ |
| 25 | *11 | H | -CFH₂ | H | -CH₃ | -CH₃ |
| 26 | *11 | H | - CF₂H | H | -CH₃ | -CH₃ |
| 27 | - CH₃ | H | - CF₂H | H | -CH₃ | -CH₃ |
| 28 | -CH₃ | H | -CF₃ | H | -CH₃ | -CH₃ |
| 29 | *2 | H | *2 | H | -CH₃ | -CH₃ |
| 30 | *12 | H | H | H | -CH₃ | -CH₃ |
| 31 | *13 | H | H | H | -CH₃ | -CH₃ |
| 32 | *14 | H | H | H | - CH₃ | -CH₃ |
| 33 | *15 | H | H | H | -CH₃ | -CH₃ |
| 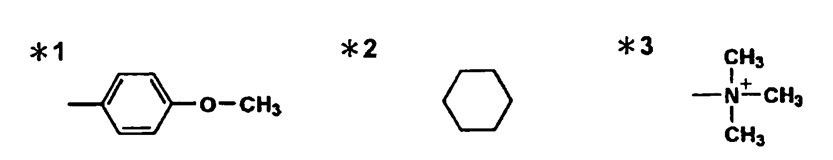 | | | | | | |
| 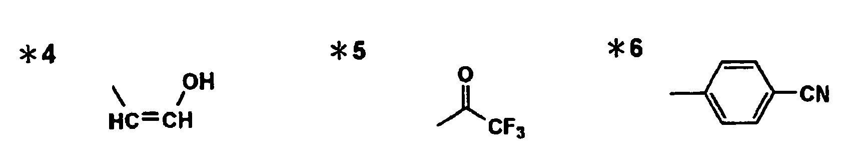 | | | | | | |
| 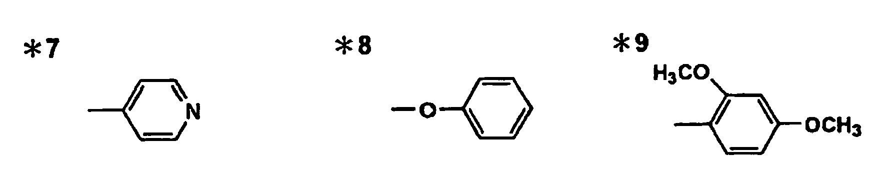 | | | | | | |
| 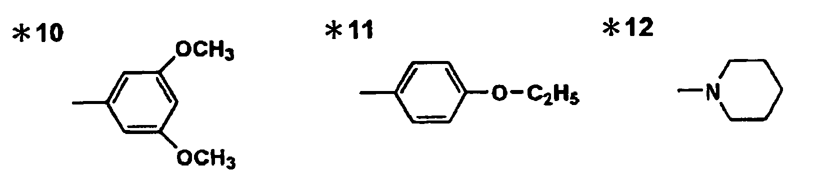 | | | | | | |
| 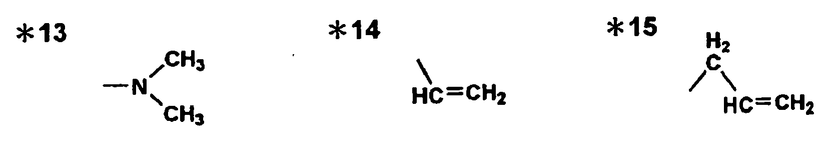 | | | | | | |
| 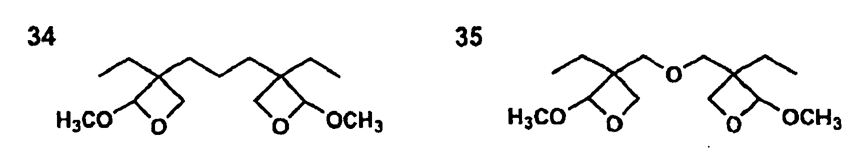 | | | | | | |
| 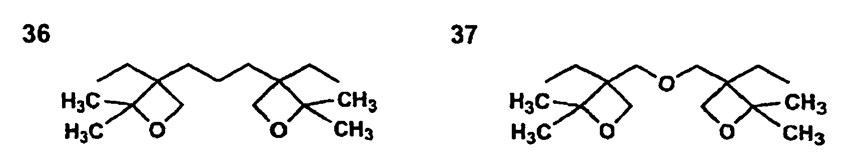 | | | | | | |
| 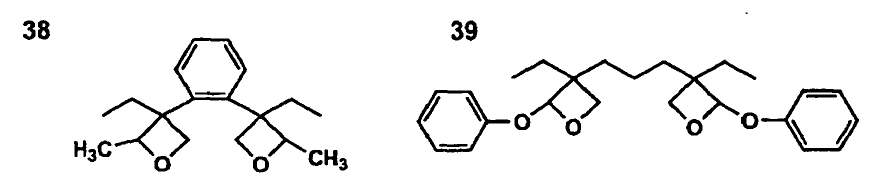 | | | | | | |
| 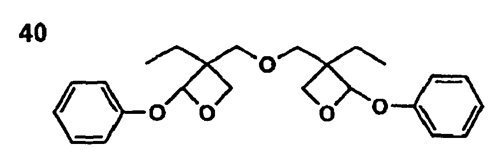 | | | | | | |
| 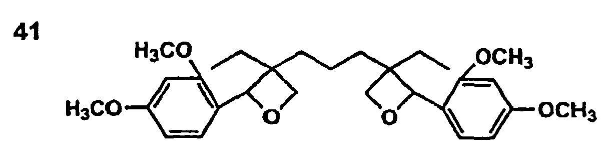 | | | | | | |
| 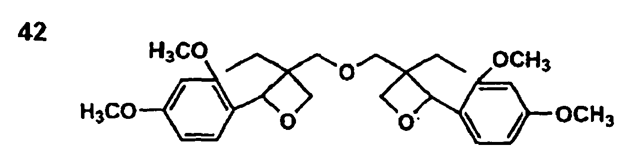 | | | | | | |
| 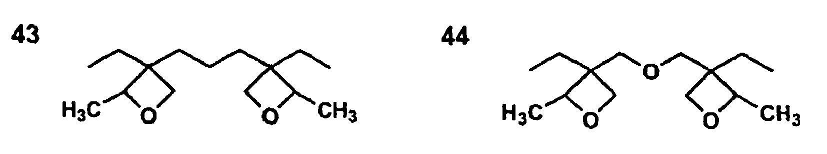 | | | | | | |

Moreover, each of the foregoing compounds can be easily synthesized primarily through the scheme shown below by referring to the method described in the fourth item in "Catch-ball between Polymer Science and Organic Chemistry" and the following references, but the synthesis method is not limited thereto.

### Synthesis of general formula (1)

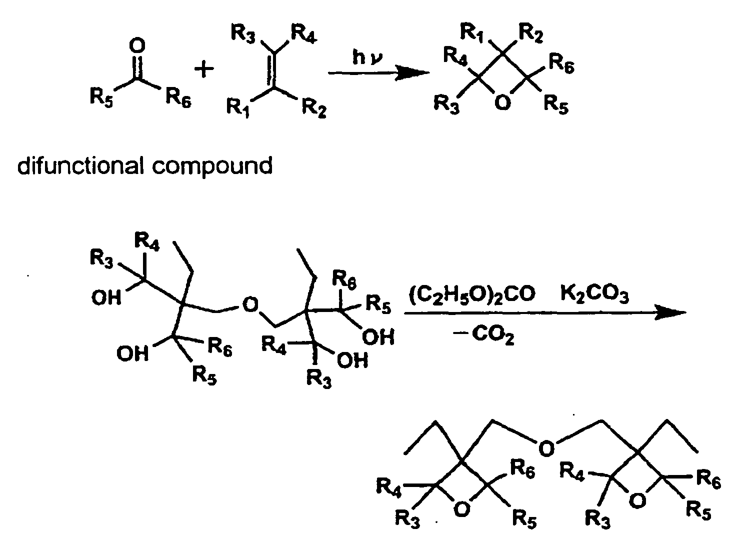

1) Hu Xianming, Richard M. Kellogg, Synthesis, 533-538, May (1995);
2) A. O. Fittton, J. Hill, D. Ejane, R. Miller, Synth., 12, 1140 (1980);
3) Toshiro Imai and Shinya Nishida, Can. J. Chem. Vol. 59, 2503-2509 (1981);
4) Nobujiro Shimizu, Shintaro Yamaola, and Yuho Tsuno, Bull. Chem. Soc. Jpn., 56, 3853-3854 (1983);
5) Walter Fisher and Cyrila A. Grob, Helv. Chim. Acta., 61, 2336 (1978);
6) Chem. Ber. 101, 1850 (1968);
7) "Heterocyclic Compounds with Three- and Four- membered Rings", Part Two, Chapter IX, Interscience Publisers, John Wiley & Sons, New York (1964)
8) H. A. J. Curless, "Synthetic Organic Photochemistry", Plenum, New York (1984);
9) M. Braun, Nachr. Chem. Tech. Lab., 33, 213 (1985);
10) S. H. Schroester, J. Org. Chem., 34, 5, 1181 (1969);
11) D. R. Arnold, Adv. Photochem., 6, 301 (1968).

(b) The epoxy compounds include aromatic epoxides, alicyclic epoxides and aliphatic epoxides and the like.

The preferred aromatic epoxides are di- or polyglycidyl ethers prepared by the reaction between polyhydric phenol having at least one aromatic nucleus or alkylene oxide adduct thereof and epichlorohydrin, including for example, di- or polyglycidyl ethers of bisphenol A or alkylene oxide adduct thereof, di- or polyglycidyl ethers of hydrogenated bisphenol A or alkylene oxide adduct thereof, novolac type epoxy resin and the like. Here, alkylene oxides include ethylene oxide, propylene oxide and the like.

Alicyclic epoxides are preferably cyclohexene oxide or cyclopentene oxide-containing compounds which are produced by epoxidizing a compound having at least one cycloalkane ring such as cyclohexene or cyclopentene ring, etc. with an appropriate oxdizing agent such as hydrogen peroxide, peracid and the like.

The preferred aliphatic epoxides include di- or polyglycidyl ethers of aliphatic polyhydric alcohol or alkylene oxide adduct thereof and the like. Representative examples such compounds include diglycidyl ethers of alkylene glycols such as diglycidyl ether of ethylene glycol, diglycidyl ether of propylene glycol, diglycidyl ether of 1,6-hexanediol, etc.; polyglycidyl ethers of polyhydric alcohols such as di- or triglycidyl ethers of glycerine or alkylene oxide adduct thereof, etc.; diglycidyl ethers of polyalkylene glycols such as diglycidyl ethers of polyethylene glycol or alkylene oxide adduct thereof, diglycidyl ethers of polypropylene glycol or alkylene oxide adduct thereof, etc. Here, alkylene oxides include ethylene oxide, propylene oxide and the like.

Among these epoxides, considering quick curability, aromatic epoxides and alicyclic epoxides are preferable, particularly alicyclic epoxides are preferable. In the present invention, one of epoxides described above can be used alone or an appropriate combination of two or more epoxides may be used.

Moreover, in the present invention, in terms of AMES test and sensitization test, etc., particularly considering from the viewpoint of safety to human, epoxy compounds containing an oxirane group is particularly preferably at least either epoxidized fatty acid ester or epoxidized fatty acid glyceride.

Any epoxidized fatty acid esters or epoxidized fatty acid glycerides which epoxy groups have been introduced to fatty acid esters or fatty acid glycerides may be used without any limitations.

As epoxidized fatty acid esters, epoxy methyl stearate, epoxy butyl stearate, epoxy octyl stearate and the like, which are prepared by epoxidizing oleate esters, are used. Moreover, as epoxidized fatty acid glycerides, epoxidized soybean oil, epoxidized linseed oil, epoxidized caster oil and the like, which are similarly prepared by epoxidizing soybean oil, linseed oil, caster oil and the like, are used.

(c) Vinyl ether compounds include, for example, di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, trimethylolpropane trivinyl ether, etc.; monovinyl ether compounds such as ethyl vinyl ether, n-butyl vinyl ether, iso-butyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, iso-propyl vinyl ether, iso-propenylether-O-propylene carbonate, dodecyl vinyl ether, diethylene glycol monovinyl ether, octadecyl vinyl ether and the like.

Among these vinyl ether compounds, considering curability, adhesion and surface hardness, di- or trivinyl ether compounds are preferable, particularly divinyl ether compounds are preferable. In the present invention, one of vinyl ether compounds described above can be used alone or an appropriate combination of two or more vinyl ether compounds may be used.

### (Added amount of polymerizable compounds)

The added amount of the polymerizable compounds of the present invention is for example, from 1 to 97 % by weight, more preferably from 30 to 95 % by weight based on the total weight of the above ink composition of the present invention.

### (1-3) Photopolymerization Initiator

Then the photopolymerization initiator used in the ink composition of the present invention will hereunder be described in detail.

The photopolymerization initiator used herein is a compound which can cause a chemical change by the action of light rays or through the interaction with a sensitizing dye in an electron-excited state to thus form at least one member selected from the group consisting of a radical, an acid and a base.

Specifically, the photopolymerization initiator usable herein may be any conventionally known one without any particular restriction and specific examples thereof include those mainly disclosed in, for instance, Bruce M. Monroe et al., Chemical Revue, 1993, 93:435; R.S. Davidson, Journal of Photochemistry and Biology A: Chemistry, 1993, 73:81; J.P. Faussier, "Photoinitiated Polymerization-Theory and Applications": Rapra Review, Vol. 9, Report, Rapra Technology (1998); M. Tsunooka et al., Prog. Polym. Sci., 1996, 21:1. In addition, a large number of chemically sensitized type photoresists and compounds used in the optical cationic polymerization, which may be used in the present invention, are likewise disclosed in "Organic Materials for Imaging" edited by Research Laboratory Association of Organic Electronics Materials, Published by BUNSHIN Publishing Company, 1993, pp. 187-192. Moreover, also known to one of ordinary skill in the art include a group of compounds which may undergo an oxidative or reductive linkage or cleavage through the interaction with a sensitizing dye in its electron-excited state such as those disclosed in, for instance, F.D. Saeva, Topics in Current Chemistry, 1990, 156:59; G.G. Maslak, Topics in Current Chemistry, 1993, 168:1; H.B. Shuster et al., JACS, 1990, 112:6329; and I.D.F. Eaton et al., JACS, 1980, 102:3298.

The amount of the photopolymerization initiator preferably ranges from 0.001 to 98.999% by weight on the basis of the total weight of the ink composition.

Examples of photopolymerization initiators preferably used herein are (a) aromatic ketones; (b) aromatic onium salts; (c) organic peroxides; (d) hexaaryl biimidazole compounds; (e) ketoxime ester compounds; (f) borate compounds; (g) azinium compounds; (h) metallocene compounds; (i) activated ester compounds; and (j) carbon-halogen bond-containing compounds.
(a) Examples of preferred "aromatic ketones" are compounds having benzophenone skeletons or thioxanthone skeletons such as those disclosed in "Radiation Curing in Polymer Science and Technology", J.P. Fouassier, 1993, pp. 77-117. Examples of the aromatic ketones (a) more preferably used herein are α -thiobenzophenone compounds disclosed in Japanese Examined Patent Publication (hereunder referred to as "J.P. KOKOKU") Sho 47-6416; benzoin ether compounds disclosed in J.P. KOKOKU Sho 47-3981; α -substituted benzoin compounds disclosed in J.P. KOKOKU Sho 47-22326; benzoin derivatives disclosed in J.P. KOKOKU Sho 47-23664; aroyl phosphonic acid esters disclosed in JP A Sho 57-30704; dialkoxy benzophenones disclosed in J.P. KOKOKU Sho 60-26483; benzoin ethers disclosed in J.P. KOKOKU Sho 60-26403 and JP A Sho 62-81345; α-amino-benzophenones disclosed in J.P. KOKOKU Hei 1-34242, U.S. Patent (U.S.P.) No. 4,318,791 and European Patent (E.P.) No. 0284561 A1; p-di-(dimethyl-aminobenzoyl) benzene disclosed in JP A Hei 2-211452; thio-substituted aromatic ketones disclosed in JP A Sho 61-194062; acyl-phosphine sulfides disclosed in J.P. KOKOKU Hei 2-9597; acyl-phosphines disclosed in J.P. KOKOKU Hei 2-9596; thioxanthones disclosed in J.P. KOKOKU Sho 63-61950; and coumarins disclosed in J.P. KOKOKU Sho 59-42864.
(b) The "aromatic onium salts" may be, for instance, aromatic onium salts with the elements belonging to Groups V, VI and VII of Periodic Table and more specifically with N, P, As, Sb, Bi, O, S, Se, Te or I. Examples thereof preferably used herein include iodonium salts disclosed in E.P. No. 104143, U.S.P. No. 4837124, and JP A Nos. Hei 2-150848 and Hei 2-96514; sulfonium salts disclosed in E.P. Nos. 370693, 233567, 297443, 297442, 279210 and 422570, U.S.P. Nos. 3902144, 4933377, 4760013, 4734444 and 2833827; diazonium salts (such as benzene-diazoniums which may have substituents); resins of diazonium salts (such as formaldehyde resins of diazo-diphenylamine); N-alkoxy pyridinium salts (for instance, those disclosed in, for instance, U.S.P. No. 4,743,528, JP A Nos. Sho 63-138345, Sho 63-142345 and Sho 63-142346 and J.P. KOKOKU Sho 46-42363, such as 1-methoxy-4-phenylpyridinium tetrafluoroborate); and further compounds disclosed in J.P. KOKOKU Nos. Sho 52-147277, Sho 52-14278 and Sho 52-14279. These onium salts may generate radicals or acids as active species.
(c) The foregoing "organic peroxides" include almost all of the organic compounds each having at least one oxygen-oxygen bond in the molecule and specific examples thereof preferably used herein are peroxy esters such as
   3,3',4,4'-tetra-(t-butylperoxycarbonyl)benzophenone,
   3,3',4,4'-tetra-(t-amylperoxycarbonyl)benzophenone,
   3,3',4,4'-tetra-(t-hexylperoxycarbonyl)benzophenone,
   3,3',4,4'-tetra-(t-octylperoxycarbonyl)benzophenone,
   3,3',4,4'-tetra-(cumylperoxycarbonyl)benzophenone,
   3,3',4,4'-tetra-(p-iso-propyl-cumylperoxycarbonyl)benzophenone, and
   di-t-butyl-diperoxy isophthalate.
(d) The foregoing "hexaaryl biimidazole" usable herein may be lophine dimers disclosed in J.P. KOKOKU Nos. Sho 45-37377 and Sho 44-86516, such as
   2,2'-bis(o-chlorophenyl)-4,4',5,5'-tetraphenylbiimidazole,
   2,2'-bis(o-bromophenyl)-4,4',5,5'-tetraphenylbiimidazole,
   2,2'-bis(o,p-dichloro-phenyl)-4,4',5,5'-tetraphenylbiimidazole,
   2,2'-bis(o-chlorophenyl)-4,4',5,5'-tetra-(m-methoxyphenyl)biimidazole,
   2,2'-bis(o,o'-dichloro-phenyl)-4,4',5,5'-tetraphenylbiimidazole,
   2,2'-bis(o-nitrophenyl)-4,4',5,5'-tetraphenylbiimidazole,
   2,2'-bis(o-methyl-phenyl)-4,4',5,5'-tetraphenylbiimidazole, and
   2,2'-bis(o-trifluoro-phenyl)-4,4',5,5'-tetraphenyl biimidazole.
(e) The foregoing "ketoxime ester compound" usable herein may be, for instance,
   3-benzoyloxy-iminobutane-2-one, 3-acetoxy-iminobutane-2-one,
   3-propionyloxy-imino-butane-2-one, 2-acetoxy-iminopentane-3-one,
   2-acetoxy-imino-1-phenylpropane-1-one,
   2-benzoyloxy-imino-1-phenylpropane-1-one,
   3-p-toluenesulfonyloxy-iminobutane-2-one, and
   2-ethoxycarbonyloxyimino-1-phenylprop ane-1-one.
(f) Examples of the foregoing "borate compounds" usable herein are those disclosed in U.S.P. Nos. 3,567,453 and 4,343,891 and E.P. Nos. 109,772 and 109,773.
(g) Examples of the foregoing "azinium compounds" usable herein are N-O bond-carrying compounds such as those disclosed in JP A Nos. Sho 63-138345, Sho 63-142345, Sho 63-142346 and Sho 63-143537 and J.P. KOKOKU Sho 46-42363.
(h) Examples of the foregoing "metallocene compounds" usable herein are titanocene compounds disclosed in JP A Nos. Sho 59-152396, Sho 61-151197, Sho 63-41484, Hei 2-249 and Hei 2-4705; and iron-arene complexes disclosed in JP A Nos. Hei 1-304453 and Hei 1-152109.
   Specific examples of the foregoing titanocene compounds are
   di-cyclopenta-dienyl-Ti-di-chloride, di-cyclopentadienyl-Ti-bis-phenyl,
   di-cyclopentadienyl-Ti-bis-2,3,4,5,6-pentafluorophen-1-yl,
   di-cyclopentadienyl-Ti-bis-2,3,5,6-tetrafluorophen-1-yl,
   di-cyclopentadienyl-Ti-bis-2,4,6-trifluorophen-1-yl,
   di-cyclopentadienyl-Ti-bis-2,6-di-fluorophen-1-yl,
   di-cyclopentadienyl-Ti-bis-2,4-di-fluorophen-1-yl,
   dimethyl-cyclopenta-dienyl-Ti-bis-2,3,4,5,6-pentafluorophen-1-yl,
   dimethyl-cyclopentadienyl-Ti-bis-2,3,5,6-tetrafluorophen-1-yl,
   dimethyl-cyclopentadienyl-Ti-bis-2,4-difluorophen-1-yl,
   bis(cyclo-pentadienyl)-bis(2,6-difluoro-3-(pyr-1-yl)phenyl)titanium,
   bis(cyclopentadienyl)-bis-[2,6-difluoro-3-(methyl-sulfonamide)phenyl]titanium,
   and
   bis(cyclopentadienyl)-bis-[2,6-diffuoro-3-(N-butyl-biaroyl-amino)phenyl]titanium.
(i) Examples of the foregoing "activated ester compounds" usable herein are nitrobenzyl ester compounds disclosed in E.P. Nos. 0290750, 046083, 156153, 271851 and 0388343, U.S.P. Nos. 3,901710 and 4,181,531, JP A Nos. Sho 60-198538 and Sho 53-133022; imino-sulfonate compounds disclosed in E.P. Nos. 0199672, 84515, 199672, 044115 and 0101122, U.S.P. Nos. 4,618,564, 4,371,605 and 4,431,774, JP A Nos. Sho 64-18143, Hei 2-245756 and Hei 4-365048; and compounds disclosed in J.P. KOKOKU Nos. Sho 62-6223 and Sho 63-14340, and JP A Sho 59-174831.
(j) Examples of the foregoing "carbon-halogen bond-containing compounds" preferably used herein are those disclosed in, for instance, WAKABAYASHI et al., Bull. Chem. Soc. Japan, 1969, 42:2924; those disclosed in British Patent (G.B.P.) No. 1,388,492; those disclosed in JP A Sho 53-133428; and those described in German Patent (G.P.) No. 3,337,024.

In addition, also usable herein include, for instance, compounds disclosed in F.C. Schaefer et al., J. Org. Chem., 1964, 29:1527; compounds disclosed in JP A Sho 62-58241; and compounds disclosed in JP A Hei 5-281728. Usable herein likewise include, for instance, compounds disclosed in G.P. No. 2,641,100; compounds disclosed in G.P. No.3,333,450; a group of compounds disclosed in G.P. No. 3,021,590; and a group of compounds disclosed in G.P. No. 3,021,599.

Specific examples of the foregoing compounds (a) to (j) preferably used herein further include those listed below: 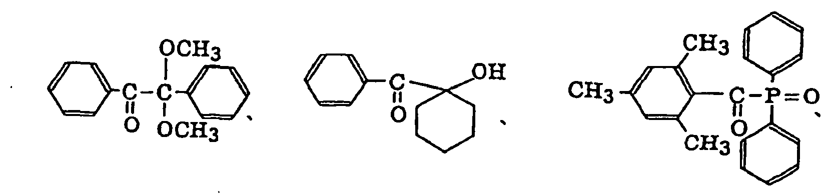 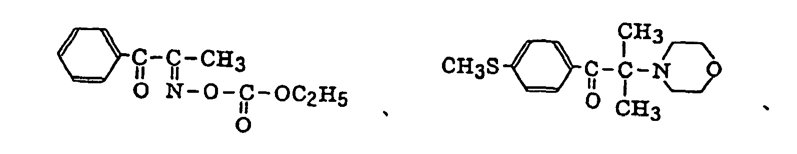 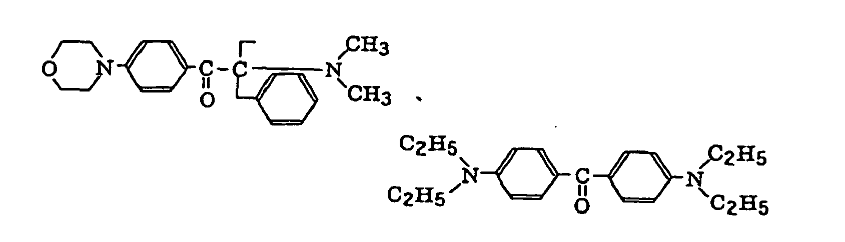 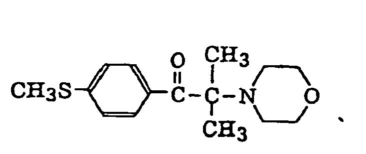 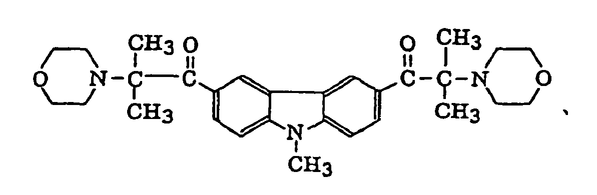 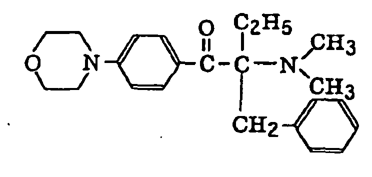 etc.

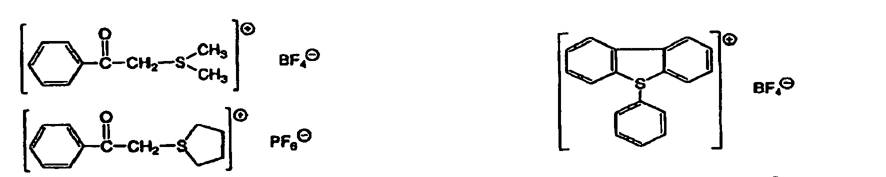

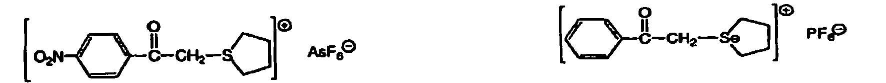

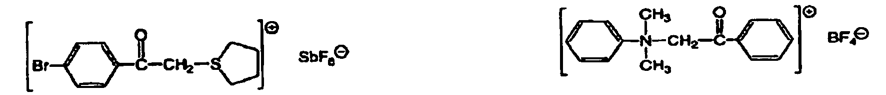

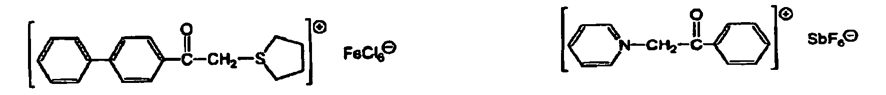

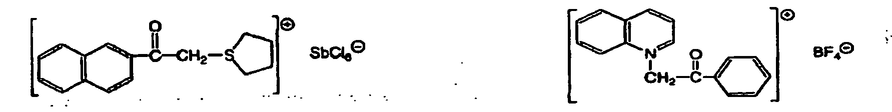

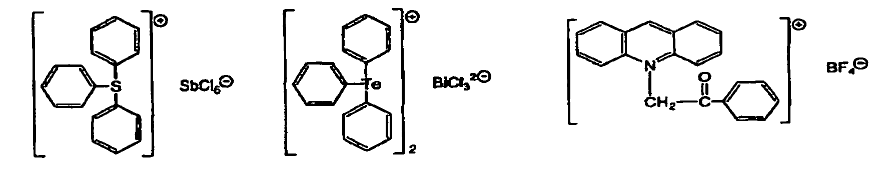

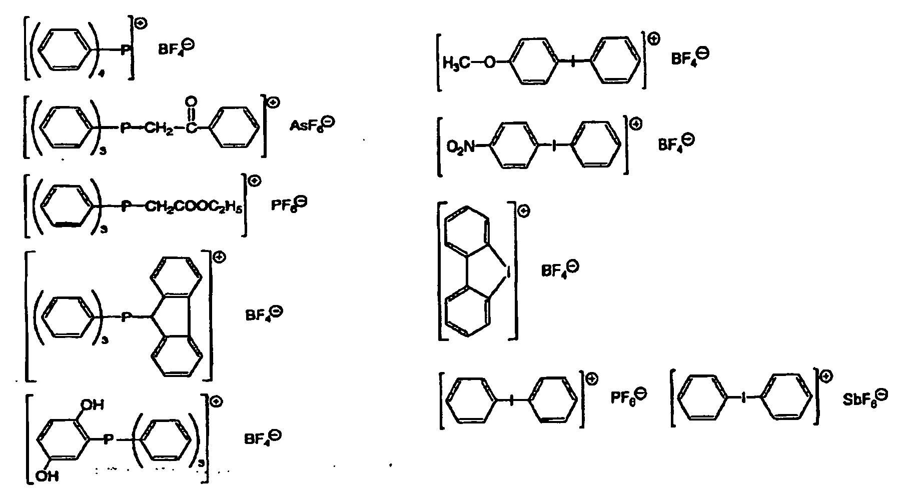

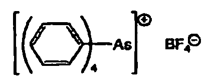

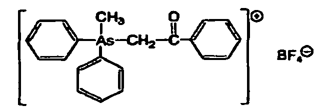

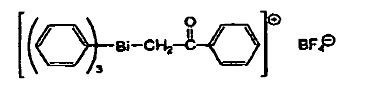

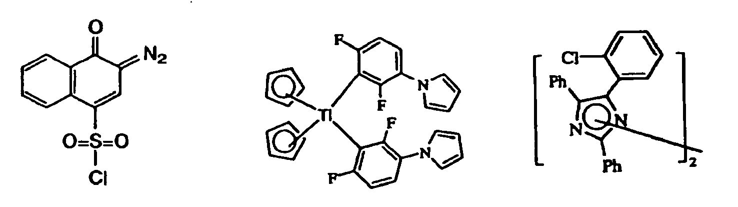

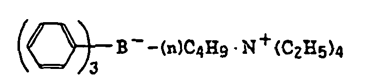

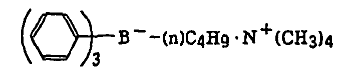

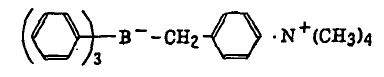

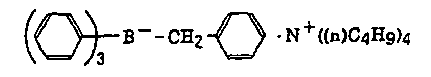

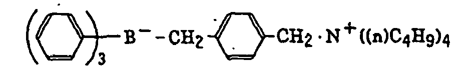

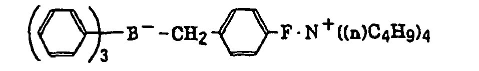

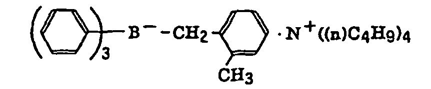

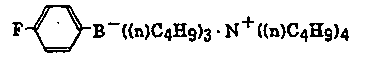

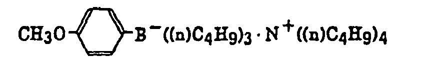

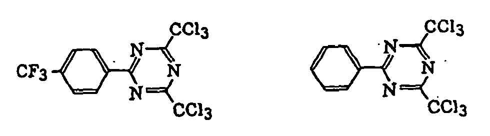

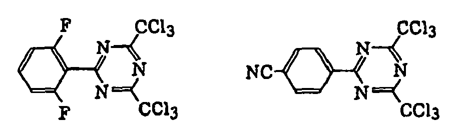

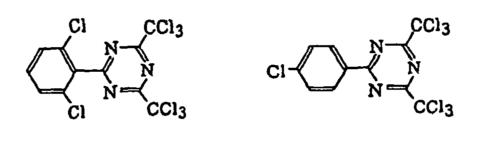

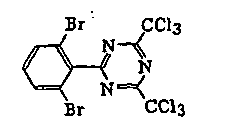

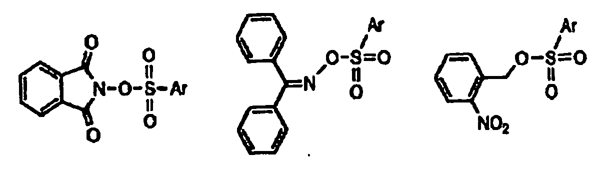

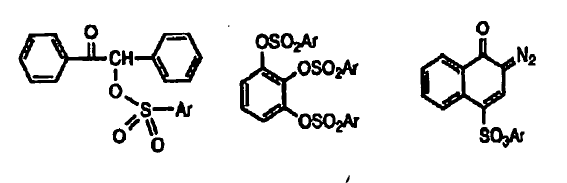

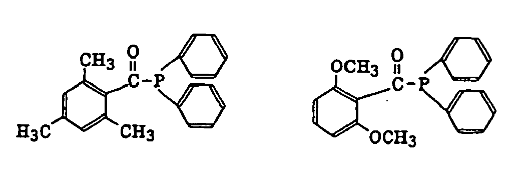

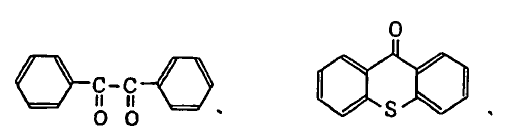

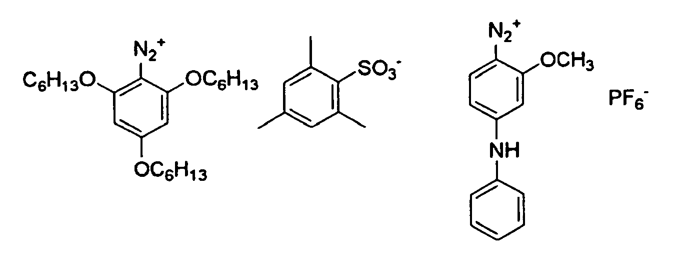

### (1-4) Sensitizing Dye

In the present invention, a sensitizing dye may be incorporated into the ink composition to improve the sensitivity of the photopolymerization initiator. Examples of sensitizing dyes preferably used are those which belong to the following groups of compounds and which can absorb light rays having a wavelength falling within the range of from 350 to 450 nm.

Specific examples thereof are polynuclear aromatic compounds (such as pyrene, perylene, and triphenylene); xanthenes (such as Fluorescein, Eosine, Erythrosine, Rhodamine B, and Rose Bengale);cyanine dyes (such as thia-carbocyanine, and oxa-carbocyanine); merocyanines (such as merocyanine, and carbo-merocyanine); thiazines (such as Thionine, Methylene Blue and Toluidine Blue); acridine dyes (such as Acridine Orange, Chloroflavin, and Acriflavine); anthraquinones (such as anthraquinone); squaliums (such as squalium); coumarins (such as 7-diethylamino-4-methyl coumarin).

Examples of more preferred sensitizing dyes are those represented by the following general formulas (IX) to (XIII):

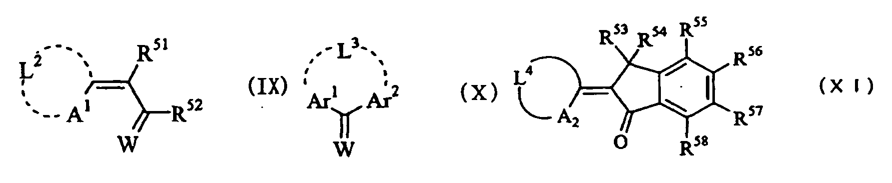

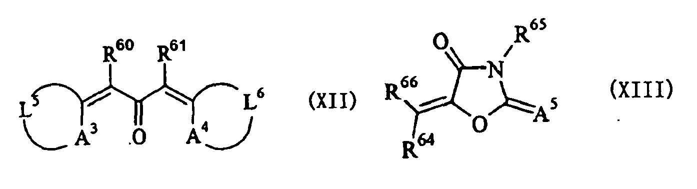

In Formula (IX), A¹ represents a sulfur atom or a group: NR⁵⁰, R⁵⁰ represents an alkyl group or an aryl group, L² represents a non-metallic atomic group which forms a basic nucleus of this dye together with the adjacent A² and the adjacent carbon atoms, R⁵¹ and R⁵² each independently represent a hydrogen atom or a monovalent non-metallic atomic group, or R⁵¹ and R⁵² may be linked together to form an acidic nucleus of the dye. In addition, W represents an oxygen or sulfur atom.

In Formula (X), Ar¹ and Ar² each independently represent an aryl group and they are linked together through -L³-, wherein L³ represents -O- or -S-. In addition, W is identical to that specified above in connection with Formula (IX).

In Formula (XI), A² represents a sulfur atom or a group: NR⁵⁹, L⁴ represents a non-metallic atomic group for forming a basic nucleus of this dye in cooperation with the neighboring A² and the neighboring carbon atoms, R⁵³, R⁵⁴, R⁵⁵, R⁵⁶, R⁵⁷ and R⁵⁸ each independently represent a monovalent non-metallic atomic group and R⁵⁹ represents an alkyl group or an aryl group.

In Formula (XII), A³ and A⁴ each independently represent -S- or -NR⁶²- or -NR⁶³-, R⁶² and R⁶³ each independently represent a substituted or unsubstituted alkyl group or a substituted or unsubstituted aryl group, L⁵ and L⁶ each independently represent a non-metallic atomic group for forming a basic nucleus of this dye in cooperation with the neighboring A³ and A⁴ and the neighboring carbon atoms, R⁶⁰ and R⁶¹ each independently represent a hydrogen atom or a monovalent non-metallic atomic group or they may be linked together to form an aliphatic or aromatic ring.

In Formula (XIII), R⁶⁶ represents a substituted or unsubstituted aromatic ring or hetero ring, A⁵ represents an oxygen or sulfur atom or -NR⁶⁷-. R⁶⁴, R⁶⁶ and R⁶⁷ each independently represent a hydrogen atom or a monovalent non-metallic atomic group or each pair of (R⁶⁷ and R⁶⁴) and (R⁶⁵ and R⁶⁷) may be linked together to form an aliphatic or aromatic ring.

Specific examples of the compounds represented by the general formulas (IX) to (XIII) are those listed below:

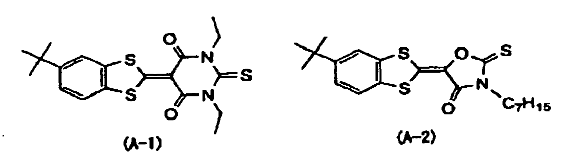

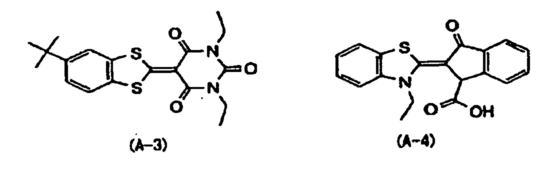

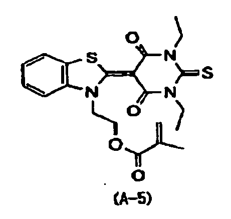

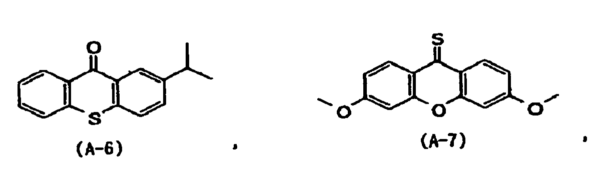

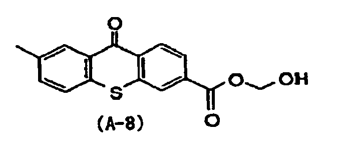

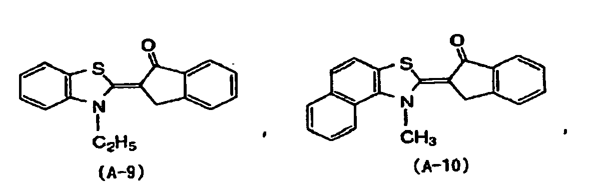

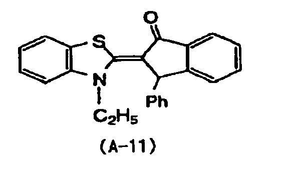

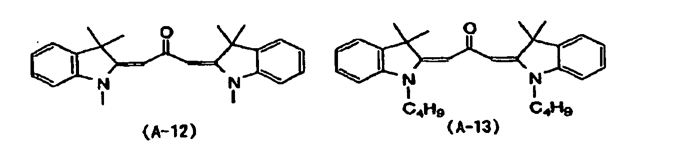

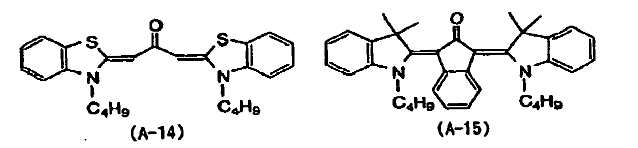

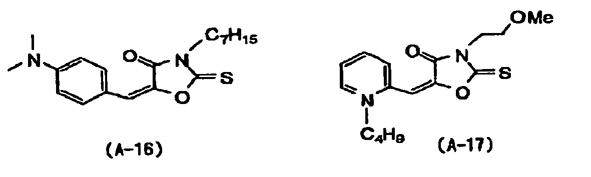

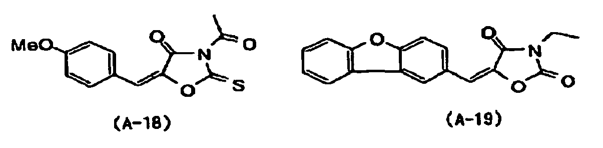

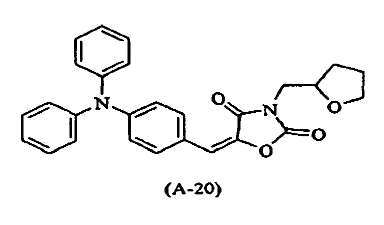

### (1-5) Co-Sensitizing Agent

Moreover, the UV ink according to the present invention may additionally comprise any known compound having, for instance, an effect of further improving the sensitivity of the resulting ink or an effect of controlling the polymerization-inhibitory action of the oxygen, as a co-sensitizing agent.

Examples of such co-sensitizing agents are amines such as the compounds disclosed in M.R. Sander et al., Journal of Polymer Society, 1972, 10:3173; J.P. KOKOKU Sho 44-20189, JP ANos. Sho 51-82102, Sho 52-134692, Sho 59-138205, Sho 60-84305, Sho 62-18537 and Sho 64-33104; and Research Disclosure No. 33825, and specific examples thereof are triethanolamine, methyl p-dimethylamino-benzoate, p-formyl-dimethylaniline and p-methylthio-dimethylaniline.

Examples of other co-sensitizing agents usable herein likewise include thiol compounds disclosed in JP A Nos. Sho 53-702 and Hei 5-142772 and J.P. KOKOKU Sho 55-500806 and di-sulfide compounds disclosed in JP A Sho 56-75643 and specific examples thereof are 2-mercapto-benzothiazole, 2-mercapto-benzoxazole, 2-mercapto-benzimidazole, 2-mercapto-4(3H)-quinazoline and β -mercapto-naphthalene.

Examples of other co-sensitizing agents usable herein also include amino acid compounds (such as N-phenyl glycine), organometal compounds (such as tributyl tin acetate) disclosed in J.P. KOKOKU Sho 48-42965, hydrogen-donors disclosed in J.P. KOKOKU Sho 55-34414, sulfur atom-containing compounds (such as trithiane) JP A Hei 6-308727, phosphorus atom-containing compounds (such as diethyl phosphite) JP A Hei 6-250387, and Si-H, Ge-H compounds disclosed in Japanese Patent Application (hereunder referred to as "J.P. A") Serial No. Hei 6-191605.

### (1-6) Coloring Material

Preferably, a coloring material is incorporated into the ink composition of the present invention. This is because the addition of a coloring material to the ink composition would permit the formation of visible images. For instance, when forming image areas on a lithographic printing plate, any coloring material is not necessarily incorporated into the ink composition, but the use thereof may be preferred from the viewpoint of the ability to examine the resulting printing plate.

Such a coloring material usable herein is not restricted to any particular one and a variety of known ones (such as pigments and dyes) can appropriately be selected depending on the intended applications. For instance, the use of a pigment is preferred when forming images excellent in the weatherability. The dye usable herein may be either water-soluble ones or oil-soluble ones, but the cationic polymerization initiator is quite susceptible to hydrolyzation due to the presence of, for instance, water (moisture) and therefore, preferably used herein are oil-soluble dyes sparingly absorbing moisture.

The coloring materials used in the present invention are not restricted to specific ones, but specific examples thereof are organic and inorganic pigments specified by the following numerals and disclosed in, for instance, Color Index:
Examples thereof include red or magenta pigments such as Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20 and 36; blue or cyan pigments such as Pigment Blue 1, 15, 15:1, 15:2, 15:3, 15:4, 15:6, 16, 17-1, 22, 27, 28, 29, 36, and 60; green pigments such as Pigment Green 7, 26, 36, and 50; yellow pigments such as Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193; black pigments such as Pigment Black 7, 28, and 26; and white pigments such as Pigment White 6, 18, and 21, which can arbitrarily be selected depending on the intended purposes.

In the present invention, the coloring material should appropriately be dispersed throughout the ink composition after the addition of the former to the latter. The coloring material can be satisfactorily be dispersed in the composition using a dispersion device such as a ball mill, sand mill, an attritor, a roll mill, an agitator, Henschel mixer, a colloid mill, an ultrasonic homogenizer, a pearl mill, a wet jet-mill, and a paint shaker.

In addition, a dispersant may be used when the coloring material is dispersed within the composition. Such a dispersant is not restricted to any specific kind, but preferably used herein are polymeric dispersants and examples thereof include those available from Zeneca Company under the trade name of Solsperse series. It is also possible to use, as a dispersant, a synergist corresponding to each pigment. These dispersants and auxiliary agents for dispersion are preferably added to the ink composition in an amount ranging from 1 to 50 parts by weight per 100 parts of the coloring material used in the invention.

The coloring material may directly be added to the ink composition of the present invention, but the material may likewise be added, in advance, to a solvent or a dispersion medium such as the polymerizable compound used in the present invention for the improvement of the dispersibility. In this respect, however, the coloring material is preferably added to the polymerizable compound used in the present invention to thus prevent the occurrence of any problem possibly encountered when such a solvent remains in the cured images, for instance, the deterioration of the resistance to solvent attack and the problem of VOC (Volatile Organic Compound) due to the residual solvent. Moreover, the polymerizable compound used is preferably selected from monomers having a lowest possible viscosity, from the viewpoint of the dispersibility.

For instance, the average particle size of the coloring material used in the invention suitably ranges from 0.08 to 0.5 *µ*m, preferably 0.1 to 0.45 *µ*m, and more preferably 0.15 to 0.4 *µ*m. Moreover, the maximum particle size of the coloring material suitably ranges, for instance, from 0.3 to 10 *µ*m and preferably 0.3 to 3 *µ*m. It is thus suitable to select the kinds of pigment, dispersant and dispersion medium as well as the establishment of the conditions for dispersion and filtration so as to achieve the foregoing maximum particle size. Such particle size control would permit and ensure the inhibition of the occurrence of any clogging of head nozzles, and the improvement or conservation of storage stability, transparency and sensitivity to curing of the resulting ink.

When incorporating a coloring material into the ink composition of the present invention, it is suitable that the amount thereof to be added ranges, for instance, from 1 to 10% by weight and preferably 2 to 6% by weight on the basis of the total weight of the ink composition.

### (1-7) Other Components

Other components may if necessary be incorporated into the ink composition of the present invention. Examples of such other components are polymerization inhibitors and solvents.

The polymerization inhibitor may be added thereto in order to improve the shelf stability of the resulting composition. In addition, the ink composition of the present invention is preferably heated to a temperature ranging from 40 to 80°C to thus reduce the viscosity thereof prior to the ejection thereof and accordingly, a polymerization inhibitor is preferably added to the composition to prevent any clogging of the head due to the heat polymerization thereof. The polymerization inhibitor is added to the ink composition of the invention in an amount ranging from 200 to 20000 ppm on the basis of the total weight of the composition. Examples of such polymerization inhibitors are hydroquinone, benzoquinone, p-methoxy-phenol, TEMPO, TEMPOL and KUPERON A1.

It is desirable that the ink composition of the present invention is free of any solvent to prevent the occurrence of such problems concerning the resistance to solvent attack and VOC, but it is effective to use an organic solvent for the improvement of the adhesion thereof to a recording medium in a quite small amount which never becomes a cause of the foregoing problems.

Specific examples of such solvents are ketone type solvents such as acetone, methyl ethyl ketone and diethyl ketone; alcohol type solvents such as methanol, ethanol, 2-propanol, 1-propanol, 1-butanol and tert-butanol; chlorine atom-containing solvents such as chloroform and methylene chloride; aromatic solvents such as benzene and toluene; ester type solvents such as ethyl acetate, butyl acetate and isopropyl acetate; ether type solvents such as diethyl ether, tetrahydrofuran and dioxane; and glycol ether type solvents such as ethylene glycol monomethyl ether and ethylene glycol dimethyl ether.

In this case, the amount of the solvent used preferably ranges from 0.1 to 5% by weight and more preferably 0.1 to 3% by weight on the basis of the total weight of the ink composition.

Moreover, the ink composition of the present invention may comprise either a radical polymerizable type or cationic polymerizable type system and the composition preferably comprises both of these two systems or the composition is a radical/cation hybrid type curable ink.

In addition to the foregoing, any known compound may if necessary be added to the ink composition of the invention. Such known compounds may appropriately be selected from the group consisting of, for instance, surfactants, additives for leveling, matting agents, and additives for adjusting the physical properties of the ink film such as polyester resins, polyurethane resins, vinyl resins, acrylic resins, rubber type resins and waxes. In addition, it is likewise preferred that a tackifier such as polyolefin and/or PET, which never adversely affects the polymerization, is incorporated into the ink composition for the improvement of the adhesion of the ink to the recording medium. Specific examples of such tackifiers are high molecular weight adhesive polymers (such as copolymers derived from esters of (meth)acrylic acids and alcohols carrying alkyl groups each having 1 to 20 carbon atoms, esters of (meth)acrylic acids and alicyclic alcohols having 3 to 14 carbon atoms, and esters of (meth)acrylic acids and aromatic alcohols having 6 to 14 carbon atoms) disclosed in JP A 2001-49200 (passage appearing on pages 5 to 6), and polymerizable unsaturated bond-containing low molecular weight tackiness-imparting resins.

### (1-8) Characteristic Properties of Ink Composition

The ink jet-recording ink composition should preferably have a viscosity, at the temperature (for instance, 40 to 80°C and preferably 25 to 30°C) encountered when it is ejected, on the order of, for instance, 7 to 30 mPa · sec and preferably 7 to 20 mPa · sec. Preferably, the mixing ratio of the components used in the ink composition of the present invention is appropriately adjusted so that the viscosity of the resulting composition falls within the range specified above. The use of an ink composition whose viscosity at room temperature is set at a higher level would permit the prevention of any penetration thereof into a recording medium even when using a porous recording medium, the reduction of the amount of uncured monomer and the reduction of the quantity of bad smells. Further, this likewise suppresses the occurrence of any bleeding upon the impact of the ink on the recording medium and as a result, the quality of image is considerably improved.

The surface tension of the ink composition for ink jet-recording according to the present invention ranges, for instance, from 20 to 30 mN/m and preferably 23 to 28 mN/m. When using a variety of recording mediums such as polyolefin materials, PET materials, coated paper and non-coated paper for recording, the surface tension of the ink composition is preferably not less than 20 mN/m from the viewpoint of the bleeding and penetration of the resulting ink, while it is preferably not more than 30 mN/m from the viewpoint of the wettability.

### (2) Method and Device for Ink Jet-Recording

The following are detailed description of the ink jet-recording method and the ink jet-recording device, which can suitably be adopted in the present invention:

### (2-1) Ink Jet-Recording Method

The present invention provides a method which comprises the steps of ejecting or impacting the foregoing ink jet-recording ink composition onto a recording medium (or a substrate) and curing the ink composition ejected from nozzle onto the substrate by the irradiation thereof with radiant rays to thus form images on the substrate. More specifically, the present invention relates to a method comprising the following steps:
(a) a step for applying the foregoing ink composition onto a recording medium; and
(b) a step for curing the ink composition by the irradiation of the ink composition with radiant rays having a wavelength ranging from 200 to 600 nm, preferably 300 to 450 nm and more preferably 350 to 420 nm, at an output of not more than 2000 mJ/cm², preferably 10 to 2000 mJ/cm², more preferably 20 to 1000 mJ/cm², and further preferably 50 to 800 mJ/cm², to thus form images of the cured ink composition on the recording medium.

The recording medium usable herein is not restricted to any specific one and it may be, for instance, paper materials such as the usual non-coated paper and coated paper; a variety of non-absorptive resin materials used in the so-called soft packaging, and resin films obtained by forming the foregoing resins into films. In this respect, examples of the various kinds of plastic films are PET films, OPS films, OPP films, ONy films, PVC films, PE films, and TAC films. In addition to the foregoing, other plastic substances usable as materials for the recording mediums likewise include, for instance, polycarbonate, acrylic resins, ABS, polyacetals, PVA and rubber materials. In addition, metallic and glass materials may be used as recording mediums.

In the ink composition of the present invention, if the materials selected have low heat-shrinkable properties during curing, the resulting ink composition is excellent in the adhesion to a recording medium and therefore, the composition shows such an advantage that it can form highly accurate images even on films quite susceptible to curling and/or deformation due to the shrinkage through the curing of the same or due to the heat generated during the curing reaction such as heat-shrinkable PET films, OPS films, OPP films, ONy films and PVC films.

### [Examples of Methods for Ejecting and Placing Ink Composition on Substrate]

As methods for ejecting and placing or impacting the ink composition on a recording medium, it is preferred to select the ink jet-recording method in which a specially designed ink is ejected through a nozzle in the form of fine liquid drops to thus adhere the drops onto a blank for printing. There have been known, as ink jet-recording heads, the Bubble Jet (registered trade mark) method which comprises applying an electric voltage to a heater to thus generate air bubbles to force out the ink, the thermal ink jet method, and the piezoelectric element system for forcing out an ink through the vibrational motions of a piezoelectric element and the ink composition of the present invention can be used in either of these methods.

Further, the ink jet-recording method of the present invention will hereunder be described below in detail while taking, by way of example, a method for preparing a lithographic printing plate which comprises the steps of ejecting an ink composition to place it on a substrate for lithographic printing plate to thus form images on the substrate.

The lithographic printing plate of the present invention comprises a hydrophilic substrate and hydrophobic regions (images) formed on the hydrophilic substrate using the ink composition of the present invention. This method for preparing a lithographic printing plate comprises the following steps:
(1) a step for ejecting the ink composition of the present invention to place it on the hydrophilic substrate; and
(2) a step of curing the ink composition placed on the surface of the hydrophilic substrate by irradiating the surface with radiant rays to thus form hydrophobic regions (images) of the cured ink composition on the hydrophilic substrate.

### (2-1-1) Lithographic Printing Plate

In this respect, the lithographic printing plate comprises a hydrophilic substrate and images formed on the substrate.

Conventionally, there have widely been used, as such a lithographic printing plate, the so-called PS plate which comprises a hydrophilic substrate provided thereon with a lipophilic light-sensitive resin layer. Such a PS plate has in general been prepared by subjecting the PS plate to a mask exposure (surface exposure) through a lithfilm and then removing the un-exposed area through dissolution to thus obtain a desired printing plate. Recently, however, there has widely been used the digitization technique in which image information is electronically treated, accumulated and outputted using a computer and accordingly, there has been desired for the development of a novel image-outputting system capable of coping with the digitization technique. In particular, there has been developed a computer-to-plate (CTP) technique which comprises the step of scanning highly directive light beam such as a laser beam in response to the digitized image information to thus directly produce a printing plate, without using any lithfilm.

As an example of the method for preparing a lithographic printing plate which permits such an exposure process through scanning, there can be listed, for instance, a method for directly preparing a lithographic printing plate using an ink composition. More specifically, this method comprises the steps of discharging an ink onto the surface of a substrate, preferably a hydrophilic substrate according to, for instance, the ink jet-recording technique and then curing the ink thus deposited on the substrate to thus form a printing plate provided thereon with desired images of cured ink (preferably hydrophobic images). The ink composition of the present invention is suitably used in such a method for the preparation of a printing plate.

The substrate (recording medium) on which the ink composition of the present invention is discharged is not restricted to any specific one inasmuch as it is a dimensionally stable plate-like substrate. The substrate is preferably a hydrophilic one. Specific examples thereof include paper, paper laminated with a plastic film (such as a polyethylene, polypropylene or polystyrene film), a metal plate (such as an aluminum, zinc or copper plate), a plastic film (such as a film of, for instance, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate and polyvinyl acetal), and paper or a plastic film laminated with the foregoing metal foil or on which the foregoing metal is vapor-deposited. Preferred substrates are, for instance, polyester films and aluminum plates. Among them, preferably used herein are aluminum plates since they have high dimensional stability and they are relatively cheap.

The aluminum plate may be a pure aluminum plate, a plate of an aluminum alloy comprising aluminum as a main component and a trace amount of foreign elements or a thin film of aluminum or an aluminum alloy, which is laminated with a plastic film. Examples of such foreign elements included in the aluminum alloy are silicon, iron, manganese, copper, magnesium, chromium, zinc, bismuth, nickel and titanium. The content of these foreign elements present in the aluminum alloy is preferably not more than 10% by weight. In the present invention, a pure aluminum plate is preferably used as such a substrate, but it would be difficult to form a completely pure aluminum plate because of the limit in the refining technique and therefore, preferably used herein may be aluminum plates containing trace amounts of foreign elements. The aluminum plate usable herein is not restricted in its composition and those prepared from any known aluminum material can appropriately be used without any restriction.

The thickness of the substrate preferably ranges from 0.1 to 0.6 mm and more preferably 0.15 to 0.4 mm.

Prior to the practical use of the aluminum plate, it is preferably subjected to a surface treatment such as a surface-roughening treatment and/or an anodization treatment. These surface-treatments permit the improvement of the hydrophilicity of the substrate surface and make, easy, the achievement of high adhesion thereof to the image-recording layer. The aluminum plate is if necessary degreased with, for instance, a surfactant, an organic solvent and/or an aqueous alkali solution for the removal of the rolling oil present on the surface of the plate prior to the surface-roughening treatment of the aluminum plate.

The aluminum plate may be surface-roughened according to a variety of methods and examples thereof include a mechanical surface-roughening treatment, an electrochemical surface-roughening treatment (surface-roughening treatment in which the surface of the plate is electrochemically dissolved) and a chemical surface-roughening treatment (surface-roughening treatment in which the surface of the plate is chemically and selectively dissolved).

Examples of such mechanical surface-roughening treatments are various known ones such as a ball-polishing method, a brush-polishing method, a blast-polishing method and a buff-polishing method. Alternatively, it is also possible to use a transfer method in which uneven patterns are transferred to the surface of the plate using a roll having such uneven patterns on its surface during the step for rolling the aluminum plate.

Examples of such electrochemical surface-roughening treatments include those in which the surface-roughening is carried out by passing, through the aluminum plate an alternating or direct current in an electrolyte containing, for instance, an acid such as hydrochloric acid or nitric acid. In addition, it is also possible to use a method which makes use of a mixed acid as disclosed in JP A Sho 54-63902.

The aluminum plate thus surface-roughened may if necessary be subjected to an alkali etching treatment using an aqueous solution of, for instance, potassium hydroxide or sodium hydroxide, then it is subjected to a neutralization treatment and thereafter, the plate is if necessary anodized for the improvement of the wear resistance.

Electrolytes usable in the anodization treatment of the aluminum plate are, for instance, a variety of electrolytes capable of forming porous anodized layer and specific examples thereof currently used include sulfuric acid, hydrochloric acid, oxalic acid, chromic acid and mixtures thereof. the concentrations of these electrolytes are appropriately determined depending on the kinds of the electrolytes selected.

The anodization conditions may variously vary depending on the electrolyte used and cannot unconditionally be specified, but preferably used are as follows: an electrolyte concentration ranging from 1 to 80% by weight; an electrolyte solution temperature ranging from 5 to 70°C; a current density ranging from 5 to 60 A/dm²; an electric voltage ranging from 1 to 100 V; an electrolyzation time ranging from 10 seconds to 5 minutes. The quantity of the anodized layer formed preferably ranges from 1.0 to 5.0 g/m² and more preferably 1.5 to 4.0 g/m². The anodized layer formed in an amount falling within the range specified above would permits the formation of a printing plate having good printing durability and carrying non-image area having good resistance to defects.

The foregoing surface-treated and anodized substrate may be used as the substrate of the present invention without any post-treatment, but the plate may if necessary be subjected to a treatment for the further improvement of the adhesion to the upper layers, the hydrophilicity, the anti-fouling properties, and heat insulating properties, selected from, for instance, the following ones: a treatment for expanding the micropores present in the anodized layer, a sealing treatment of the layer such as those disclosed in JP A Nos. 2001-253181 and 2001-322365; a surface-hydrophilization treatment comprising dipping the plate in an aqueous solution containing a hydrophilic compound; and a combination thereof. The micropore-expansion treatment and the sealing treatment are not restricted to these specific ones and they may be any conventionally known one.

### [Sealing Treatment]

Examples of such sealing treatments are a steam-sealing treatment, a sealing treatment with an aqueous solution containing an inorganic fluorine atom-containing compound such as a treatment with fluoro-zirconic acid alone and a treatment with sodium fluoride, a lithium chloride-containing steam-sealing treatment and a sealing treatment with hot water.

Among them, preferably used herein are sealing treatments using aqueous solutions containing inorganic fluorine atom-containing compounds, a steam-sealing treatment and a sealing treatment with hot water. These treatments will now be described in more detail below:

### <Sealing Treatment with Aqueous Solution of Inorganic Fluoride Compound>

In this sealing treatment using an aqueous solution containing an inorganic fluorine atom-containing compound, such an inorganic fluorine atom-containing compound used may suitably be metal fluorides.

Specific examples thereof are sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, fluoro-zirconic acid, fluoro-titanic acid, hexafluoro-silicic acid, nickel fluoride, iron fluoride, fluoro-phosphoric acid, and ammonium fluoro-phosphate. Among these, preferred are sodium fluorozirconate, sodium fluorotitanate, fluoro-zirconic acid and fluoro-titanic acid.

The concentration of the inorganic fluorine atom-containing compound present in the aqueous solution is preferably not less than 0.01% by weight and more preferably not less than 0.05% by weight for ensuring the sufficient sealing of the micropores present in the anodized layer; and preferably not more than 1% by weight and more preferably not more than 0.5% by weight from the viewpoint of the anti-fouling properties.

Preferably, the aqueous solution containing an inorganic fluorine atom-containing compound further comprises a phosphate compound. The incorporation of such a compound would permit the improvement of the hydrophilicity of the surface of the anodized layer and this in turn results in the improvement of the ability of the resulting plate to develop on a printing machine and the anti-fouling properties of the resulting printing plate.

Examples of such phosphate compounds are phosphoric acid salts with metals such as alkali metals and alkaline earth metals.

Specific examples thereof include zinc phosphate, aluminum phosphate, ammonium phosphate, di-ammonium hydrogen phosphate, ammonium di-hydrogen phosphate, mono-ammonium phosphate, mono-potassium phosphate, mono-sodium phosphate, potassium di-hydrogen phosphate, di-potassium hydrogen phosphate, calcium phosphate, ammonium sodium hydrogen phosphate, magnesium hydrogen phosphate, magnesium phosphate, ferrous phosphate, ferric phosphate, sodium di-hydrogen phosphate, sodium phosphate, di-sodium hydrogen phosphate, lead phosphate, di-ammonium phosphate, calcium di-hydrogen phosphate, lithium phosphate, phospho-tungstic acid, ammonium phospho-tungstate, sodium phospho-tungstate, ammonium phospho-molybdate, sodium phospho-molybdate, sodium phosphite, sodium tripolyphosphate, and sodium pyrophosphate. Among them, preferred are sodium di-hydrogen phosphate, di-sodium hydrogen phosphate, potassium di-hydrogen phosphate and di-potassium hydrogen phosphate.

The combination of the inorganic fluoride compound with the phosphate compound is not restricted to any specific one, but the aqueous solution preferably comprises at least sodium fluorozirconate as the inorganic fluorine atom-containing compound and at least sodium di-hydrogen phosphate as the phosphate compound.

The concentration of the phosphate compound in the aqueous solution is preferably not less than 0.01% by weight and more preferably not less than 0.1% by weight from the viewpoint of the ability of the resulting plate to develop on a printing machine and the anti-fouling properties of the resulting printing plate, while it is preferably not more than 20% by weight and more preferably not more than 5% by weight from the viewpoint of the solubility thereof in the solution.

The mixing ratio of the compounds in the aqueous solution is not restricted to any specific one, but the ratio (by weight) of the inorganic fluorine atom-containing compound to the phosphoric acid salt compound preferably ranges from 1/200 to 10/1 and more preferably 1/30 to 2/1.

Moreover, the temperature of the aqueous solution is preferably not less than 20°C and more preferably not less than 40°C, while it is preferably not more than 100°C and more preferably not more than 80°C.

In addition, the aqueous solution preferably has a pH value of not less than 1 and more preferably not less than 2, while the aqueous solution preferably has a pH value of not more than 11 and more preferably not more than 5.

The method for sealing treatment using an aqueous solution containing an inorganic fluorine atom-containing compound is not limited to any particular one and may be, for instance, a dipping method and a spraying method. These methods may be used alone in one time or several times, or they may be used in any combination of at least two of them.

Among these, preferably used herein is a dipping method. When the aluminum plate is treated according to the dipping method, the treating time is preferably not less than one second and more preferably not less than 3 seconds, while it is preferably not more than 100 seconds and more preferably not more than 20 seconds.

### <Sealing Treatment with Water Vapor (Steam)>

The sealing treatment with steam may be, for instance, one in which the aluminum plate having an anodized layer formed thereon is continuously or intermittently brought into close contact with pressurized steam or the steam under ordinary pressure.

The temperature of the steam is preferably not less than 80°C and more preferably not less than 95°C, while it is preferably not more than 105°C.

The pressure of the steam preferably ranges from (atmospheric pressure - 50mmAq) to (atmospheric pressure + 300mmAq) (1.008 × 10⁵ to 1.043 × 10⁵ Pa).

In addition, the contact time is preferably not less than one second and more preferably 3 seconds, while it is preferably not more than 100 seconds and more preferably not more than 20 seconds.

### <Sealing Treatment with Hot Water>

The sealing treatment with hot water may be, for instance, one in which the aluminum plate having an anodized layer formed thereon is dipped in hot water.

The hot water used in this treatment may comprise an inorganic salt (such as a phosphate) or an organic salt.

The temperature of the hot water is preferably not less than 80°C and more preferably not less than 95°C, while it is preferably not more than 100°C.

The time for dipping the plate in hot water is preferably not less than one second and more preferably 3 seconds, while it is preferably not more than 100 seconds and more preferably not more than 20 seconds.

The hydrophilization treatment used in the present invention may be, for instance, the treatment with alkali metal silicates such as those disclosed in U.S.P. Nos. 2,714,066, 3,181,461, 3,280,734 and 3,902,734. In this method, the treatment comprises the step of dipping a substrate in an aqueous solution of, for instance, sodium silicate or electrolyzing the substrate in such an aqueous solution. In addition to the foregoing, usable herein include, for instance, a method disclosed in J.P. KOKOKU Sho 36-22063, in which a substrate is treated with potassium fluorozirconate; and methods disclosed in U.S.P. Nos. 3,276,868, 4,153,461 and 4,689,272, wherein a substrate is treated with polyvinyl sulfonic acid.

The substrate usable herein preferably has a center line average surface roughness on the order of 0.10 to 1.2 *µ*m. The use of a substrate having such average surface roughness would permit the achievement of good adhesion to the image-recording layer and the good printing durability and anti-fouling properties of the resulting printing plate.

### (2-1-2) Step for Ejecting Ink Composition to Place it onto the Foregoing Hydrophilic Substrate

When ejecting the ink composition of the present invention to place it on the surface of the hydrophilized substrate, it is preferred that the ink composition is heated to a temperature ranging from 40 to 80°C, preferably 25 to 30°C, to thus reduce the viscosity of the ink composition to a level on the order of 7 to 30 mPa · sec and preferably 7 to 20 mPa · sec, prior to the ejection. The use of this method would permit the achievement of highly stable ejection of the ink composition. The radiation-curable ink composition such as the ink composition according to the present invention in general has a high viscosity as compared with that observed for the usual water-based ink used as an ink jet-recording ink composition and therefore, the viscosity thereof widely varies in response to the temperature variation encountered during the printing operations. The variation of ink viscosity may greatly affect the size change of ink droplets and the ejection rate thereof and this in turn results in the deterioration of the image quality. Therefore, the variation of the ink temperature during printing should be controlled as small as possible. Thus, the ink temperature should suitably be controlled so that the variation thereof falls within the range: the set temperature ±5°C, preferably the set temperature±2°C and more preferably the set temperature±1°C.

### (2-1-3) Step for Curing the Ink Placed on Hydrophilic Substrate by Irradiation Thereof with Radiant Rays

The foregoing ink placed on the surface of the hydrophilic substrate is cured by the irradiation thereof with radiant rays. More specifically, the sensitizing dye included in the polymerization initiator system present in the ink composition of the present invention is activated to its excited state through the absorption of radiant rays, the excited sensitizing dye then comes in close contact with the polymerization initiator present in the system to induce the decomposition of the latter and the polymerizable compound present in the composition thus undergoes radical polymerization to thus cure the ink composition.

The radiant rays used herein may be, for instance, an α-beam, a γ -beam, an electron beam, X-rays, ultraviolet light rays, visible light rays or infrared light rays. The peak wavelength of the radiation may vary depending on the absorption characteristics of each particular sensitizing dye selected, but it preferably ranges from 200 to 600 nm, preferably 300 to 450 nm and more preferably 350 to 450 nm. The polymerization initiator used in the present invention is sufficiently sensitive even to radiation having a low output. Accordingly, the output of the radiation desirably corresponds to the irradiation energy on the order of, for instance, not more than 2000 mJ/cm², preferably 10 to 2000 mJ/cm², more preferably 20 to 1000 mJ/cm² and further preferably 50 to 800 mJ/cm². Moreover, in the present invention, the radiant rays are suitably applied at an intensity of illuminance on the exposed surface ranging, for instance, from 10 to 2000 mW/cm², and preferably 20 to 1000 mW/cm².

The foregoing ink composition of the present invention is suitably irradiated with such radiant rays, for instance, for 0.01 to 120 seconds and preferably 0.1 to 90 seconds.

The fundamental irradiation method and conditions for irradiating with such radiant rays are disclosed in JP A Sho 60-132767. Specifically, light sources are positioned on both sides of a head unit including an ink-ejection device and the head unit and the light sources are scanned according to the so-called shuttle system to thus irradiate the ink composition. The irradiation with radiant rays is carried out after the elapse of a desired time period (for instance, 0.01 to 0.5 second, preferably 0.01 to 0.3 second and more preferably 0.01 to 0.15 second) from the impact of the ink composition on the substrate.

Any bleeding of the ink composition placed on the substrate possibly observed prior to the curing of the ink composition can be inhibited by controlling the time elapsed from the impact of the ink till the irradiation with radiant rays to a level as short as possible. Moreover, in case of a porous recording medium, the ink placed on the substrate can be exposed to radiant rays before the ink penetrates even in such a deeper portion that the light rays from the light sources never reach and therefore, the cured ink composition or the recorded material is almost free of any un-reacted monomer and as a result, the generation of any offensive odor can be suppressed.

Further, the curing of the ink may be completed by the use of a separate light source free of any driving means. WO 99/54415 discloses an irradiation method which makes use of an optical fiber or a method in which a collimated light beam from a light source is incident upon a mirror surface positioned on the side face of the head unit to thus irradiate the recording area with UV light rays.

If using the foregoing ink jet-recording method, the dot diameter of the ink impacted on the surface can be kept constant even when using a variety of recording mediums having different surface wettability and the quality of images can thus be improved. Incidentally, a color image is preferably obtained by superposing colors, in order, from a low lightness one to a higher lightness one. If multiple ink compositions are thus superposed, in order of the magnitude of lightness, the radiant rays are liable to easily reach even the lower ink layers and accordingly, it would be expected to ensure high sensitivity to curing, to reduce the amount of residual monomers, to suppress the generation of any offensive odor and to improve the adhesion. In addition, all of the ink compositions can first be placed and then comprehensively exposed to light rays, but it is rather preferred to expose each time a color is ejected from the viewpoint of the acceleration of the curing.

The foregoing ink composition of the present invention is thus cured through the irradiation with radiant rays to thus form hydrophobic images on the foregoing hydrophilic substrate surface.

### (2-2) Ink Jet-Recording Device

The ink jet-recording device usable in the present invention is not restricted to any particular one and may be any commercially available one. According to the present invention, images can be recorded on a recording medium using any commercially available ink jet-recording device.

The ink jet-recording device used in the present invention comprises, for instance, an ink-supply system, a temperature sensor and a source of radiant rays.

The ink-supply system comprises, for instance, a main tank containing the foregoing ink composition of the present invention, piping works for supply, an ink-supply tank immediately before the ink jet head, a filter, and a piezoelectric ink-ejection head. The piezoelectric ink-ejection head can be operated in such a manner that it can eject multiple-sized dots of 1 to 100 pl, preferably 8 to 30 pl at a resolution of, for instance, 320 × 320 to 4000 × 4000 dpi, preferably 400 × 400 to 1600×1600 dpi and more preferably 720×720 dpi. In this connection, the unit "dpi" used herein means the number of dots per unit length (2.54 cm).

As has been described above, the radiation-curable ink is desirably maintained at a predetermined temperature during the ejection thereof and accordingly, the region extending from the ink-supply tank to the ink jet head portion may be thermally insulated or may be heated. The method for controlling the temperature at this stage is not restricted to any particular one, but it is preferred to arrange a plurality temperature sensors at every piping works to thus heat the system or to control the temperature while taking into consideration the flow rate of ink and the environmental temperature. Temperature sensors may be positioned on the ink-supply tank and at a position in the proximity to the nozzle of the ink jet head. In addition, the head unit to be heated is preferably thermally insulated or thermally shielded so that the main body of the device is never affected by the temperature of the outside air. It is likewise preferred that the heat content of a heating unit is reduced and simultaneously it is thermally isolated from other portions to make the printer-rise time required for the heating short or to reduce the loss of heating energy.

The sources of radiant rays principally used include, for instance, a mercury lamp or a gas· solid state laser and there have widely been known the use of, for instance, a mercury lamp or a metal halide lamp in an ultraviolet light-curable ink jet-recording device. However, there has presently been intensively desired for the development of the technique which never uses mercury from the viewpoint of the environmental protection and accordingly, it would be quite effective from the industrial and environmental standpoint to switch over to an UV-emission device made of a GaN type semiconductor. Further, LED (UV-LED) and LD (UV-LD) have smaller sizes and a longer service life, can provide a high efficiency and are less expensive and therefore, they have been expected as effective light sources for light-curable ink jet-recording device.

Further, a light-emitting diode (LED) and a laser diode (LD) may be used as sources of radiant rays. In particular, when an ultraviolet source is required, an ultraviolet LED and ultraviolet LD can be used as such light sources. For instance, Nichia Chemical Co., Ltd. has already been put, on the market, an ultraviolet LED whose principal emission spectrum has a wavelength existing between 365 nm and 420 nm. Moreover, U.S.P. No. 6,084,250 discloses an LED device capable of emitting light rays whose wavelength falls within the range of from 300 nm to 370 nm and this source would be effective when light rays having such a shorter wavelength should be used. In addition, other ultraviolet LEDs may likewise be commercially available and radiant rays falling within different ultraviolet regions may be used for the irradiation. The radiation sources particularly preferably used in the present invention are UV-LEDs and particularly preferably those having peak wavelengths ranging from 350 to 420 nm.

### [Examples]

### Preparation of Pigment Dispersion

According to the following method, there was prepared each of the following yellow, magenta, cyan and black pigment dispersions 1. In this respect, each dispersion was prepared using a known dispersion device while appropriately adjusting the dispersion conditions in such a manner that the average particle size of each pigment dispersion fell within the range of from 0.2 to 0.3 *µ*m and then filtered through a filter with heating to thus give each corresponding pigment dispersion.

### (Yellow Pigment Dispersion 1)

| Component | Amt. (part by weight) |
|---|---|
| C.I. Pigment Yellow 12 | 10 |
| Polymeric dispersant (Solsperse series, available from Zeneca Company) | 5 |
| Stearyl acrylate | 85 |

### (Magenta Pigment Dispersion 1)

| Component | Amt. (part by weight) |
|---|---|
| C.I. Pigment Red 57:1 | 15 |
| Polymeric dispersant (Solsperse series, available from Zeneca Company) | 5 |
| Stearyl acrylate | 80 |

### (Cyan Pigment Dispersion 1)

| Component | Amt. (part by weight) |
|---|---|
| C.I. Pigment Blue 15:3 | 20 |
| Polymeric dispersant (Solsperse series, available from Zeneca Company) | 5 |
| Stearyl acrylate | 75 |

### (Black Pigment Dispersion 1)

| Component | Amt. (part by weight) |
|---|---|
| C.I. Pigment Black 7 | 20 |
| Polymeric dispersant (Solsperse series, available from Zeneca Company) | 5 |
| Stearyl acrylate | 75 |

### «Preparation of Ink»

An ink having each corresponding color was prepared according to the method described below and using each dispersion prepared above:

### (Yellow Ink 1)

| Component | Amt. (part by weight) |
|---|---|
| Yellow Pigment Dispersion 1 | 20 |
| 1,6-Hexanediol diacrylate | 60 |
| Caprolactone-modified di-pentaerythritol hexa-acrylate | 10 |
| Polymerization Initiator (IRGACURE 184 available from Chiba Specialty Chemicals Company) | 8 |
| Alumina tri-hydrate | 2 |

### (Magenta Ink 1)

| Component | Amt. (part by weight) |
|---|---|
| Magenta Pigment Dispersion 1 | 20 |
| 1,6-Hexanediol diacrylate | 60 |
| Caprolactone-modified di-pentaerythritol hexa-acrylate | 10 |
| Polymerization Initiator (IRGACURE 184 available from Chiba Specialty Chemicals Company) | 8 |
| Alumina tri-hydrate | 2 |

### (Cyan Ink 1)

| Component | Amt. (part by weight) |
|---|---|
| Cyan Pigment Dispersion 1 | 15 |
| 1,6-Hexanediol diacrylate | 60 |
| Caprolactone-modified di-pentaerythritol hexa-acrylate | 15 |
| Polymerization Initiator (IRGACURE 184 available from Chiba Specialty Chemicals Company) | 8 |
| Alumina tri-hydrate | 2 |

### (Black Ink 1)

| Component | Amt. (part by weight) |
|---|---|
| Black Pigment Dispersion 1 | 15 |
| 1,6-Hexanediol diacrylate | 60 |
| Caprolactone-modified di-pentaerythritol hexa-acrylate | 15 |
| Polymerization Initiator (IRGACURE 184 available from Chiba Specialty Chemicals Company) | 8 |
| Alumina tri-hydrate | 2 |

Each of the foregoing formulation having the corresponding color and composition thus prepared was filtered through a filter having an absolute degree of filtration of 2 µm to thus give each intended ink 1 having the corresponding color.

### «Ink Jet-Recording of Images»

Then, images were recorded on a recording medium using a commercially available ink jet-recording device provided with a piezoelectric ink jet-nozzle. The ink-supply system thereof comprised a main tank, piping works for supply, an ink-supply tank arranged immediately before the ink jet head, a filter, and a piezoelectric ink-ejection head and the region extending from the ink-supply tank to the ink jet head portion was thermally insulated and heated. Temperature sensors were positioned on the ink-supply tank and at a position in the proximity to the nozzle of the ink jet head and the temperature of the device was controlled in such a manner that the nozzle portion was always maintained at a temperature of 70°C±2°C. The piezoelectric ink-ejection head was operated in such a manner that it could eject multiple-sized dots of 8 to 30 pl at a resolution of 720 × 720 dpi. After the impact of the ink on the recording medium, UV-A light rays were condensed to an illuminance at the exposed surface of 100 mW/cm², and the exposure system, the main scanning speed and the frequency of ejection were controlled in such a manner that the irradiation with the light rays was initiated after 0.1 second from the impact of the ink on the medium. Moreover, the exposure time was set at a variety of levels and the exposure energy was applied onto the impacted ink. In this connection, the unit "dpi" used herein means the number of dots per unit length (2.54 cm).

The inks each having the corresponding color and prepared above were ejected on a recording medium in the order, black, cyan, magenta and yellow, at the environmental temperature of 25°C and the irradiation with the ultraviolet rays was carried out every time each ink was applied. In this respect, the total energy exposed per color was evenly set at 300 mJ/cm², which was the energy required for the complete curing of each color ink till the placed ink completely lost its stickiness through the examination by touch. Each color image was recorded on, as recording mediums, a surface-grained aluminum substrate, a surface-treated transparent twin-screw extruded polypropylene film to which good printability was imparted, a soft polyvinyl chloride film, cast-coated paper, and commercially available regenerated paper and as a result, each image thus obtained had a high resolution and was free of any dot's bleeding. Further, all of the inks were completely free of any strike through even when an image was recorded on wood free paper, the ink was sufficiently cured and there were not observed any deformation and color change of the cured product before and after the irradiation thereof with light rays. In addition, the resulting recorded images never gave out bad smells due to the presence of un-reacted monomers. Moreover, the ink recorded on a film was sufficiently flexible, the ink never underwent any cracking even if it was folded and any problem never arose in the cellophane tape (R)-peel test for the inspection of adhesiveness.

Moreover, the viscosity of the ink thus prepared was determined at the ejection temperature after storing the ink at 75% RH and 60°C for 3 days and the ratio of the viscosity observed after the storage to that observed before the storage was found to be 1.0 to 1.1, which could practically be used without any trouble.

### Examples 2 to 5: Preparation of Inks

Magenta inks 2 to 5 were prepared according to the method described below:

### (Magenta Ink 2)

| Component | Amt. (part by weight) |
|---|---|
| Magenta Pigment Dispersion 1 | 20 |
| 1,6-Hexanediol diacrylate | 60 |
| Di-functional aromatic urethane acrylate specified below (Molecular weight (Mw): 1500) | 5 |
| Hexa-functional aliphatic urethane acrylate specified below (Mw: 1000) | 5 |
| Polymerization Initiator (IRGACURE 184 available from Chiba Specialty Chemicals Company) | 8 |
| Alumina tri-hydrate | 2 |

### (Magenta Ink 3)

| Component | Amt. (part by weight) |
|---|---|
| Magenta Pigment Dispersion 1 | 20 |
| 1,6-Hexanediol diacrylate | 50 |
| Lactone-modified acrylate specified below (Mw: 458) | 15 |
| Hexa-functional aliphatic urethane acrylate specified below (Mw: 1000) | 5 |
| Polymerization Initiator (IRGACURE 184 available from Chiba Specialty Chemicals Company) | 8 |
| Zinc borate hydrate | 2 |

### (Magenta Ink 4)

| Component | Amt. (part by weight) |
|---|---|
| Magenta Pigment Dispersion 1 | 20 |
| 1,6-Hexanediol diacrylate | 60 |
| Hexa-functional aliphatic urethane acrylate specified below (Mw: 1000) | 10 |
| Polymerization Initiator (IRGACURE 184 available from Chiba Specialty Chemicals Company) | 8 |
| Calcium sulfate | 2 |

### (Preparation of Magenta Pigment Dispersion 2)

The same procedures used in the preparation of the magenta pigment dispersion 1 described in Example 1 were repeated except for using isobornyl acrylate in place of the stearyl acrylate used in Example 1 to thus obtain a pigment dispersion (magenta pigment dispersion 2).

### (Magenta Ink 5)

| Component | Amt. (part by weight) |
|---|---|
| Magenta pigment dispersion 2 | 20 |
| 1,6-Hexanediol diacrylate | 55 |
| Tetramethylol-methane triacrylate | 15 |
| Polymerization Initiator (IRGACURE 184 available from Chiba Specialty Chemicals Company) | 8 |
| Magnesium ammonium phosphate | 2 |

### Comparative Examples 1 to 2: Preparation of Inks

Magenta inks 6 to 7 were prepared according to the following method:

### (Magenta Ink 6: Comp. Ex. 1)

| Component | Amt. (part by weight) |
|---|---|
| Magenta pigment dispersion 2 | 20 |
| 1,6-Hexanediol diacrylate | 50 |
| Lactone-modified acrylate specified below (Mw: 458) | 20 |
| Hexa-functional aliphatic urethane acrylate specified below (Mw: 1000) | 5 |
| Polymerization Initiator (IRGACURE 184 available from Chiba Specialty Chemicals Company) | 5 |

### (Magenta Ink 7: Comp. Ex. 2)

| Component | Amt. (part by weight) |
|---|---|
| Magenta pigment dispersion 2 | 20 |
| Stearyl acrylate | 60 |
| Di-functional aromatic urethane acrylate specified below (Mw: 1500) | 10 |
| Hexa-functional aliphatic urethane acrylate specified below (Mw: 1000) | 5 |
| Polymerization Initiator (IRGACURE 184 available from Chiba Specialty Chemicals Company) | 5 |

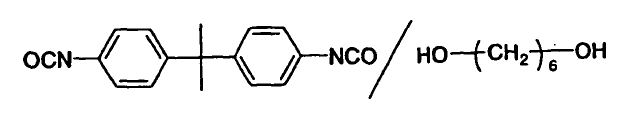

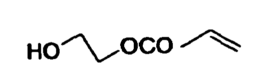

### Hexa-functional aliphatic urethane acrylate

A product obtained by capping the terminal of a condensate 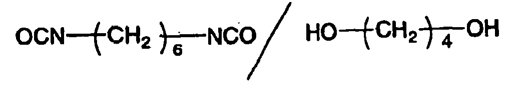 with

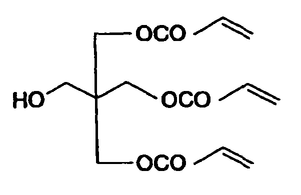

### Lactone-modified acrylate:

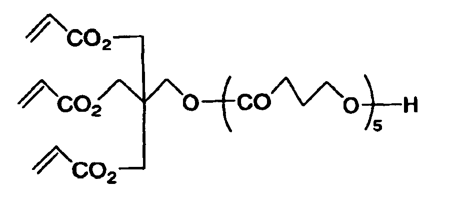

The ink compositions prepared in the foregoing Examples and Comparative Examples were found to have viscosities as determined at the ejection temperature falling within the range of from 7 to 20 mPa • sec.

### <<Ink Jet-Recording of Images>>

Magenta images were printed according to the method used in Example 1 using the magenta inks 2 to 7 prepared above and the magenta ink 1 prepared in Example 1.

### <<Evaluation of Ink Jet-Recorded Images>>

Then the images thus recorded were inspected for the sensitivity required for curing, the penetrability thereof through commercially available regenerated paper, the ink-bleeding on a surface-grained aluminum substrate, the adhesion, the printing durability of the resulting printing plate and the storage stability, according to the following methods.

### (Determination of Sensitivity to Curing)

The quantity of energy (mJ/cm²) applied onto the image-carrying plane, which was required for curing the ink till it completely lost the stickiness, was herein defined to be the desired sensitivity to curing. In this respect, the smaller the numerical value thus determined, the higher the sensitivity to curing.

### (Evaluation of Storage Stability)

The viscosity of each ink was determined at the ejection temperature after storing the same at 75% RH and 60°C for 3 days and the increment of the ink viscosity was expressed in terms of the ratio of the viscosity observed after the storage to that observed before the storage. In this connection, if the viscosity is not changed and the ratio is closer to 1.0, the corresponding ink had greater storage stability and it is not preferred to use an ink having a ratio exceeding 1.5, since the ink often causes clogging of the ejection nozzle, during the impact of the ink.

### (Evaluation of Shape of Cured Product)

The shape of each cured product obtained after the irradiation with ultraviolet rays was visually evaluated on the basis of the following evaluation criteria:
O: There was not observed any deformation and the cured product was found to be smooth.
Δ: There was observed a slight warpage.
× : There was observed warpage and the presence of deformation could be recognized.

### (Color Change of Ink Observed after Irradiation with Ultraviolet Rays)

The color of the ink prepared and that of the cured product obtained after the irradiation of the ink with ultraviolet rays were examined to determine the presence of any color change and to thus evaluate the color change according to the following evaluation criteria:
○: There was not observed any color change.
Δ: There was observed a slight color change.
×: There was observed a definite color change (yellowing).

The results obtained in these evaluation tests are summarized in the following Table 2.

**Table 2**

| Ex. No. | 1 | 2 | 3 | 4 | 5 | 1* | 2* |
|---|---|---|---|---|---|---|---|
| Magenta Ink No. | 1 | 2 | 3 | 4 | 5 | 6 | 7 |
| Sensitivity to Curing (mJ/cm²) | 150 | 150 | 150 | 150 | 150 | 150 | 150 |
| Storage Stability | 1.1 | 1.2 | 1.2 | 1.1 | 1.1 | 1.5 | 1.5 |
| Shape of Cured Product (presence of deformation) | ○ | ○ | ○ | ○ | ○ | × | × |
| Color Change | ○ | ○ | ○ | ○ | ○ | Δ | Δ |

| | | | | | | | |
|---|---|---|---|---|---|---|---|
| *: Comparative Example. | | | | | | | |

As will be clear from the data listed in Table 2, the ink compositions of the present invention prepared using the endothermic compounds have good storage stability while maintaining high sensitivity to the irradiation with radiant rays and permits the formation of high quality images free of any deformation and color change even after the curing of the same through the irradiation with ultraviolet light rays.

### Example 6

### <<Preparation of Ink>>

An ink was prepared using each pigment dispersion prepared in Example 1, according to the following method:

### (Yellow Ink A)

| Component | Amt. (part by weight) |
|---|---|
| Yellow pigment dispersion 1 | 20 |
| 1,6-Hexanediol di-acrylate | 60 |
| Caprolactone-modified di-pentaerythritol hexa-acrylate | 10 |
| Polymerization Initiator (IRGACURE 184 available from Chiba Specialty Chemicals Company) | 9 |
| GRAPHITE IG-338-50 (acid-intercalated graphite available from UCAR Carbon Company) | 1 |

### (Magenta Ink A)

| Component | Amt. (part by weight) |
|---|---|
| Magenta pigment dispersion 1 | 20 |
| 1,6-Hexanediol di-acrylate | 60 |
| Caprolactone-modified di-pentaerythritol hexa-acrylate | 10 |
| Polymerization Initiator (IRGACURE 184 available from Chiba Specialty Chemicals Company) | 9 |
| GRAPHITE IG-338-50 (acid-intercalated graphite available from UCAR Carbon Company) | 1 |

### (Cyan Ink A)

| Component | Amt. (part by weight) |
|---|---|
| Cyan pigment dispersion 1 | 15 |
| 1,6-Hexanediol di-acrylate | 60 |
| Caprolactone-modified di-pentaerythritol hexa-acrylate | 15 |
| Polymerization Initiator (IRGACURE 184 available from Chiba Specialty Chemicals Company) | 9 |
| GRAPHITE IG-338-50 (acid-intercalated graphite available from UCAR Carbon Company) | 1 |

### (Black Ink A)

| Component | Amt. (part by weight) |
|---|---|
| Black pigment dispersion 1 | 15 |
| 1,6-Hexanediol di-acrylate | 60 |
| Caprolactone-modified di-pentaerythritol hexa-acrylate | 15 |
| Polymerization Initiator (IRGACURE 184 available from Chiba Specialty Chemicals Company) | 9 |
| GRAPHITE IG-338-50 (acid-intercalated graphite available from UCAR Carbon Company) | 1 |

Each of the foregoing formulation having the corresponding color and composition thus prepared was filtered through a filter having an absolute degree of filtration of 2 *µ*m to thus give each intended ink A having the corresponding color.

### <<Ink Jet-Recording of Images>>

Then, images were recorded on a recording medium using a commercially available ink jet-recording device provided with a piezoelectric ink jet-nozzle. The ink-supply system thereof comprised a main tank, piping works for supply, an ink-supply tank arranged immediately before the ink jet head, a filter, and a piezoelectric ink-ejection head and the region extending from the ink-supply tank to the ink jet head portion was thermally insulated and heated. Temperature sensors were positioned on the ink-supply tank and at a position in the proximity to the nozzle of the ink jet head and the temperature of the device was controlled in such a manner that the nozzle portion was always maintained at a temperature of 70°C±2°C. The piezoelectric ink-ejection head was operated such that it could eject multiple-sized dots of 8 to 30 pl at a resolution of 720 × 720 dpi. After the impact of the ink on the recording medium, UV-A light rays were condensed to an illuminance at the exposed surface of 100 mW/cm² and the exposure system, the main scanning speed and the frequency of ejection were controlled in such a manner that the irradiation with the light rays was initiated after 0.1 second from the impact of the ink on the medium. Moreover, the exposure time was set at a variety of levels and the exposure energy was applied onto the placed ink. In this connection, the unit "dpi" used herein means the number of dots per unit length (2.54 cm).

The inks each having the corresponding color and prepared above were ejected on a recording medium in the order, black, cyan, magenta and yellow, at the environmental temperature of 25°C and the irradiation with the ultraviolet rays was carried out every time each ink was applied. In this respect, the total energy exposed per color was evenly set at 300 mJ/cm², which was the energy required for the complete curing of each color ink till the placed ink completely lost its stickiness through the examination by touch. Each color image was recorded on, as recording mediums, a surface-grained aluminum substrate, a surface-treated transparent twin-screw extruded polypropylene film to which good printability was imparted, a soft polyvinyl chloride film, cast-coated paper, and commercially available regenerated paper and as a result, each image thus obtained had a high resolution and was free of any dot's bleeding. Further, all of the inks were completely free of any strike through even when an image was recorded on wood free paper, the ink was sufficiently cured and there were not observed any deformation and color change of the cured product before and after the irradiation thereof with light rays. In addition, the resulting recorded images never gave out bad smells due to the presence of un-reacted monomers. Moreover, the ink recorded on a film was sufficiently flexible, the ink never underwent any cracking even if it was folded and any problem never arose in the cellophane tape (R)-peel test for the inspection of adhesiveness.

Moreover, the viscosity of the ink thus prepared was determined at the ejection temperature after storing the ink at 75% RH and 60°C for 3 days and the ratio of the viscosity after the storage to that before the storage was found to be 1.0 to 1.1, which could practically be used without any trouble.

### Examples 7 to 10: Preparation of Inks

Magenta inks B to E were prepared according to the method described below:

### (Magenta Ink B)

| Component | Amt. (part by weight) |
|---|---|
| Magenta Pigment Dispersion 1 | 20 |
| 1,6-Hexanediol diacrylate | 60 |
| Di-functional aromatic urethane acrylate specified below (Mw: 1500) | 5 |
| Hexa-functional aliphatic urethane acrylate specified below (Mw: 1000) | 5 |
| Polymerization Initiator (IRGACURE 184 available from Chiba Specialty Chemicals Company) | 9 |
| GRAPHITE IG-338-50 (acid-intercalated graphite available from UCAR Carbon Company) | 1 |

### (Magenta Ink C)

| Component | Amt. (part by weight) |
|---|---|
| Magenta Pigment Dispersion 1 | 20 |
| 1,6-Hexanediol diacrylate | 50 |
| Lactone-modified acrylate specified below (Mw: 458) | 15 |
| Hexa-functional aliphatic urethane acrylate specified below (Mw: 1000) | 5 |
| Polymerization Initiator (IRGACURE 184 available from Chiba Specialty Chemicals Company) | 9 |
| EXPANTROL 4BW (particulate hydrated alkali metal silicate-containing expandable composition available from Minnesota Mining (3M) Company) | 1 |

### (Magenta Ink D)

| Component | Amt. (part by weight) |
|---|---|
| Magenta Pigment Dispersion 1 | 20 |
| 1,6-Hexanediol diacrylate | 60 |
| Hexa-functional aliphatic urethane acrylate specified below (Mw: 1000) | 10 |
| Polymerization Initiator (IRGACURE 184 available from Chiba Specialty Chemicals Company) | 9 |
| Vermiculite (a product available from Showa Vermiculite Co., Ltd.) | 1 |

### (Magenta Ink E)

| Component | Amt. (part by weight) |
|---|---|
| Magenta Pigment Dispersion 2 | 20 |
| 1,6-Hexanediol diacrylate | 55 |
| Hexa-functional aliphatic urethane acrylate specified below (Mw: 1000) | 15 |
| Polymerization Initiator (IRGACURE 184 available from Chiba Specialty Chemicals Company) | 9 |
| EXPANTROL 4BW (particulate hydrated alkali metal silicate-containing expandable composition available from Minnesota Mining (3M) Company) | 1 |

### Comparative Example 3: Preparation of Ink

Magenta ink F was prepared according to the method described below:

### (Magenta Ink F: Comp. Ex. 3)

| Component | Amt. (part by weight) |
|---|---|
| Magenta Pigment Dispersion 2 | 20 |
| 1,6-Hexanediol diacrylate | 50 |
| Lactone-modified acrylate (Mw: 458) | 20 |
| Hexa-functional aliphatic urethane acrylate (Mw: 1000) | 5 |
| Polymerization Initiator (IRGACURE 184 available from Chiba Specialty Chemicals Company) | 5 |

"Di-functional aromatic urethane acrylate", "Hexa-functional aliphatic urethane acrylate" and "lactone-modified acrylate" are as defined in Examples 1 to 6 and Comparative Examples 1 and 2.

The ink compositions prepared in the foregoing Examples and Comparative Examples were found to have viscosities as determined at the ejection temperature falling within the range of from 7 to 20 mPa · sec.

### <<Ink Jet-Recording of Images>>

Magenta images were printed according to the method used in Example 6 using the magenta inks B to E prepared above and the ink F (Comparative Example 3).

### <<Evaluation of Ink Jet-Recorded Images>>

Then the images thus recorded were inspected for the sensitivity required for curing, the penetrability thereof through commercially available regenerated paper, the ink-bleeding on a surface-grained aluminum substrate, the adhesion, the printing durability of the resulting printing plate and the storage stability, according to the following methods.

### (Determination of Sensitivity to Curing)

The quantity of energy (mJ/cm²) applied onto the image-carrying plane, which was required for curing the ink till it completely lost the stickiness, was herein defined to be the desired sensitivity to curing. In this respect, the smaller the numerical value thus determined, the higher the sensitivity to curing.

### (Evaluation of Penetrability Through Commercially Available Regenerated Paper)

The images printed on commercially available regenerated paper were inspected for the ability thereof to pass through the paper and the latter was evaluated on the basis of the following evaluation criteria:
O: There was observed almost no penetration of ink and the image never gave out any smells of the residual monomers.
Δ : There was observed a slight penetration of the ink and the image slightly gave out smells of the residual monomers.
×: There was observed the distinct penetration of the ink even to the back face of the recording medium and the image gave out strong smells of the residual monomers.

### (Evaluation of Penetrability Through Surface-Grained Aluminum Substrate)

The images printed on a surface-grained aluminum substrate were inspected for the bleeding thereof on the aluminum substrate and the latter was evaluated on the basis of the following evaluation criteria:
O: There was not observed any bleeding between the neighboring dots.
Δ: There was observed slight bleeding of dots.
× : There was observed bleeding of dots and the images distinctly became dim.

### (Evaluation of Adhesion to Surface-Grained Aluminum Substrate)

The foregoing printed images were used as such (defect-free samples) and there were made 11 each of vertical and horizontal cuts on each printed image according to JIS K-5400 to form 100 checkers of 1 mm square and to thus form each corresponding checker pattern-carrying sample. A cellophane tape (Cellotape (registered trade mark)) was adhered to the image-carrying face of each sample, then quickly peeled off at an angle of 90 degrees and the conditions or printed images remained un-remove were evaluated on the basis of the following criteria:
○: There was not observed any peeling off of the printed image even in the checker pattern-cutting (lattice pattern-cutting) test at all.
Δ: There was observed slight peeling off of the printed image in the checker pattern-cutting test, but there was observed almost no peeling off of the printed image on the defect (checker pattern)-free samples.
× : There was observed easy peeling off of the printed image in the both Cellotape-peeling tests carried out using the foregoing defect-free and checker pattern-carrying samples.

Alternatively, images were likewise printed on PET films and OPP films and these samples were likewise inspected for the adhesion by repeating the same checker pattern-cutting tests used above and they were evaluated on the basis of the foregoing evaluation criteria.

### (Evaluation of Printing Durability)

The printing plate prepared above by printing images on a surface-grained aluminum substrate was fitted to a Heidel KOR-D printing press and printed matters were prepared by the operation of the printing press to thus determine the number of printed matters carrying complete images and the number of printed matters were relatively compared with one another (the number of the complete printed matters obtained using the sample of Comparative Example 3 was defined to be 100) and the results thus obtained were used as the indication of the printing durability. In this respect, the higher the number of the printed matters, the higher the printing durability of the printing plate.

### (Evaluation of Storage Stability)

The viscosity of each ink was determined at the ejection temperature after storing the same at 75% RH and 60°C for 3 days and the increment of the ink viscosity was expressed in terms of the ratio of the viscosity observed after its storage to that observed before its storage. In this connection, if the viscosity is not changed and the ratio is closer to 1.0, the corresponding ink had greater storage stability and it is not preferred to use an ink having a ratio exceeding 1.5, since the ink often causes clogging of the ejection nozzle during the impact of the ink.

The results obtained in these evaluation tests are summarized in the following Table 3.

**Table 3**

| Ex. No. | | 7 | 8 | 9 | 10 | 3* |
|---|---|---|---|---|---|---|
| Magenta Ink No. | | B | C | D | E | F |
| Sensitivity to Curing (mJ/cm²) | | 140 | 140 | 140 | 140 | 150 |
| Penetrability | | ○ | ○ | ○ | ○ | Δ |
| Bleeding of Ink | | ○ | ○ | ○ | ○ | Δ |
| Adhesion | Al substrate | ○ | ○ | ○ | ○ | × |
| | PET film | ○ | ○ | ○ | ○ | Δ |
| | OPP film | ○ | ○ | ○ | ○ | Δ |
| Printing Durability | | 110 | 120 | 120 | 110 | 100 |
| Storage Stability | | 1.5 | 1.4 | 1.4 | 1.4 | 1.5 |

| | | | | | | |
|---|---|---|---|---|---|---|
| :* Comparative Example. | | | | | | |

The data listed in Table 3 clearly indicate that the ink compositions according to the present invention, which make use of thermally expandable compounds would permit the formation of high quality images which have good adhesion, in particular, to a substrate without being accompanied by any reduction of sensitivity and storage stability even when irradiated with radiant rays.

## Claims

1. An ink composition comprising (a) a polymerizable compound, (b) a photopolymerization initiator, and (c) at least one compound selected from the group consisting of endothermic compounds and thermally expandable compounds.

2. The ink composition as set forth in claim 1, further comprising (d) a coloring material.

3. The ink composition as set forth in claim 2, wherein the coloring material (d) is a pigment or an oil-soluble dye.

4. The ink composition as set forth in claim 1, wherein the ink composition is an ink jet-recording ink composition.

5. An ink jet-recording method comprising the steps of ejecting the ink composition as set forth in claim 1 to place it on a recording medium and irradiating the ink composition with radiant rays to thus make the ink composition cure.

6. A printed matter obtained by ejecting the ink composition as set forth in claim 1 to place it on a recording medium and then irradiating the ink composition with radiant rays to thus make the ink composition cure.

7. A method for the preparation of a lithographic printing plate comprising the steps of ejecting the ink composition as set forth in claim 1 to place it on a hydrophilic substrate and then irradiating the ink composition with radiant rays to thus form a hydrophobic area on the substrate.

8. A lithographic printing plate having hydrophobic areas formed by ejecting the ink composition as set forth in claim 1 to place it on a hydrophilic substrate and then irradiating the ink composition with radiant rays to thus make the ink composition cure.

## Patentansprüche

1. Tintenzusammensetzung umfassend (a) eine polymerisierbare Verbindung, (b) einen Fotopolymerisationsstarter und (c) wenigstens eine Verbindung, die ausgewählt ist aus der Gruppe bestehend aus endothermen Verbindungen und thermisch expandierbaren Verbindungen.

2. Tintenzusammensetzung gemäß Anspruch 1, ferner umfassend (d) ein färbendes Material.

3. Tintenzusammensetzung gemäß Anspruch 2, wobei das färbende Material (d) ein Pigment oder ein öllöslicher Farbstoff ist.

4. Tintenzusammensetzung gemäß Anspruch 1, wobei die Tintenzusammensetzung eine Tintenstrahlaufzeichnungs-Tintenzusammensetzung ist.

5. Tintenstrahlaufzeichnungsverfahren umfassend die Schritte des Ausstoßens der Tintenzusammensetzung gemäß Anspruch 1, um sie auf einem Aufzeichnungsmedium zu plazieren, und Bestrahlen der Tintenzusammensetzung mit Lichtstrahlen, um das Härten der Tinte zu veranlassen.

6. Drucksache erhalten durch Ausstoßen der Tintenzusammensetzung gemäß Anspruch 1, um sie auf einem Aufzeichnungsmedium zu plazieren, und anschließendes Bestrahlen der Tintenzusammensetzung mit Lichtstrahlen, um so die Tintenzusammensetzung härten zu lassen.

7. Verfahren zur Herstellung einer Lithographiedruckplatte umfassend die Schritte des Ausstoßens der Tintenzusammensetzung gemäß Anspruch 1, um sie auf einem hydrophilen Substrat zu plazieren, und anschließendes Bestrahlen der Tintenzusammensetzung mit Lichtstrahlen, um einen hydrophoben Bereich auf dem Substrat zu erzeugen.

8. Lithographiedruckplatte mit hydrophoben Bereichen, die durch Ausstoßen der Tintenzusammensetzung gemäß Anspruch 1, um sie auf einem hydrophilen Substrat zu plazieren, und anschließendes Bestrahlen der Tintenzusammensetzung mit Lichtstrahlen, um so die Tintenzusammensetzung härten zu lassen, gebildet wird.

## Revendications

1. Composition d'encre comprenant (a) un composé polymérisable, (b) un initiateur de photopolymérisation et (c) au moins un composé sélectionné parmi le groupe constitué par les composés endothermiques et des composés thermoexpansibles.

2. Composition d'encre selon la revendication 1, comprenant en outre (d) une matière colorante.

3. Composition d'encre selon la revendication 2, dans laquelle la matière colorante (d) est un pigment ou un colorant liposoluble.

4. Composition d'encre selon la revendication 1, dans laquelle la composition d'encre est une composition d'encre pour enregistrement par jet d'encre.

5. Procédé d'enregistrement par jet d'encre comprenant les étapes consistant à éjecter la composition d'encre selon la revendication 1 pour la placer sur un support d'enregistrement et à irradier la composition d'encre avec des rayons énergétiques pour faire ainsi durcir la composition d'encre.

6. Matière imprimée obtenue en éjectant la composition d'encre selon la revendication 1 pour la placer sur un support d'enregistrement et en irradiant ensuite la composition d'encre avec des rayons énergétiques pour faire ainsi durcir la composition d'encre.

7. Procédé pour la préparation d'une plaque d'impression lithographique comprenant les étapes consistant à éjecter la composition d'encre selon la revendication 1 pour la placer sur un substrat hydrophile et à irradier ensuite la composition d'encre avec des rayons énergétiques pour former ainsi une zone hydrophobe sur le substrat.

8. Plaque d'impression lithographique ayant des zones hydrophobes formées en éjectant la composition d'encre selon la revendication 1 pour la placer sur un substrat hydrophile et en irradiant ensuite là composition d'encre avec des rayons énergétiques pour faire ainsi durcir la composition d'encre.
